(19) Europäisches Patentamt
European Patent Office
Office européen des brevets

(11) **EP 3 376 122 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
*F24D 19/10* (2006.01)    *G01K 17/08* (2006.01)

(21) Anmeldenummer: **18156952.6**

(22) Anmeldetag: **15.02.2018**

(54) **VERFAHREN UND VORRICHTUNG ZUR ERFASSUNG DER WÄRMEABGABE EINES HEIZKÖRPERS**

METHOD AND DEVICE FOR DETECTING THE HEAT GIVEN OFF BY A HEATING SURFACE

PROCÉDÉ ET DISPOSITIF DE DÉTERMINATION D'ÉMISSION DE CHALEUR D'UN RADIATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017 DE 102017105740**

(43) Veröffentlichungstag der Anmeldung:
**19.09.2018 Patentblatt 2018/38**

(73) Patentinhaber: **Techem Energy Services GmbH 65760 Eschborn (DE)**

(72) Erfinder:
• **Kähler, Arne 61350 Bad Homburg (DE)**

• **Klein, Joachim 65760 Eschborn (DE)**

(74) Vertreter: **Keil & Schaafhausen Patent- und Rechtsanwälte PartGmbB Friedrichstraße 2-6 60323 Frankfurt am Main (DE)**

(56) Entgegenhaltungen:
**EP-A2- 0 065 201    EP-A2- 1 376 084 EP-A2- 1 770 469**

• **"[Extract] ED - Dipl-Ing Joachim Kreuzberg"**, 1. Januar 1988 (1988-01-01), HANDBUCH DER HEIZKOSTENABRECH, VDI-VERLAG, DE, PAGE(S) 165, 185 - 191, 201, XP009136065, ISBN: 978-3-18-400837-6 * das ganze Dokument *

## Beschreibung

Die Erfindung betrifft ein Verfahren zur Erfassung der Wärmeabgabe $Q$, d.h. der über die Zeit integrierten abgegebenen Wärmeleistung $\dot{Q}$ eines Heizkörpers, bspw. mittels einer an dem Heizkörper montierten Vorrichtung zur Erfassung der Wärmeabgabe $Q$, insbesondere durch Erfassen der Wärmeleistung $\dot{Q} = dQ/dt$ und/oder der in der Zeit $\Delta t$ abgegebenen Wärmemenge $\Delta Q$, sowie eine zur Durchführung des Verfahrens eingerichtete Vorrichtung. Das Erfassen durch die Vorrichtung kann ein Anzeigen und/Speichern der abgegebenen Wärmemenge beinhalten.

Bei dem vorgeschlagenen Verfahren werden bspw. durch die Vorrichtung mittels entsprechender Temperatursensoren eine Heizkörpertemperatur $\vartheta_{HS}$ und eine Raumlufttemperatur $\vartheta_{RS}$ erfasst, und unter Verwendung der erfassten Heizkörpertemperatur $\vartheta_{HS}$, der erfassten Raumlufttemperatur $\vartheta_{RS}$ und eines oder mehrerer der Parameter Heizkörperreferenzleistung $\dot{Q}_N$, Korrekturfaktor $K_Q$, Korrekturfaktor $K_C$, Korrekturfaktor $K_T$, Heizkörperexponent $n$ oder daraus abgeleiteter Parameter, die Wärmeabgabe $Q$ des Heizkörpers insbesondere durch Integrieren bzw. Aufsummierungen der Wärmeleistung $\dot{Q}$ bzw. der abgegebenen Wärmemenge $\Delta Q$ ermittelt. Die verwendeten Parameter sind für die Vorrichtung und den Heizkörper bekannt und beispielsweise in einer Recheneinheit der Vorrichtung bei der Installation an dem Heizkörper parametrierbar. Die Parameter können insbesondere für den Typ der Vorrichtung und/oder den Typ des Heizkörpers bekannt sein, wobei eine geräteindividuelle Eichung nicht notwendig ist.

Entsprechend betrifft die Erfindung also Heizkostenverteiler und Verfahren zur Erfassung der durch einen Heizkörper abgegebenen Wärmemenge mit diesen Heizkostenverteilern (als bevorzugte zur Durchführung des vorgeschlagenen Verfahrens eingerichtete Vorrichtung). Der Heizkostenverteiler (im Folgenden auch synonym zu dem Begriff "Vorrichtung zur Erfassung der Wärmeabgabe eines Heizkörpers" verwendet) weist einen Heizkörpertemperatursensor zur Messung einer Heizkörpertemperatur $\vartheta_{HS}$ und einen Raumtemperatursensor zur Messung einer Raumlufttemperatur $\vartheta_{RS}$ auf. Eine Recheneinheit des vorgeschlagenen Heizkostenverteilers ist zur Bestimmung der abgegebenen Wärmemenge unter Verwendung der gemessenen Temperaturen eingerichtet, die dann ggf. in einem Display angezeigt und/oder in einem Speicher der Recheneinheit bspw. zur späteren Auslesung gespeichert werden kann.

Heizkostenverteiler sind in integrierter Bauform als "Kompaktgerät" ausführbar, bei dem alle funktionalen Elemente in einem Gehäuse vereint sind und das auf der Oberfläche des Heizkörpers montiert wird. Der Heizkostenverteiler ist auch in aufgelöster Bauform als "Fernfühlergerät" ausführbar, bei dem nur der Heizkörpertemperatursensor auf dem Heizkörper montiert wird, während die übrigen Baugruppen an einer anderen Stelle, vorzugsweise an der Wand montiert werden. Der Heizkörpertemperatursensor kann mit den restlichen Baugruppen drahtlos kommunizieren oder per Draht verbunden sein.

Heizkostenverteiler sind weit verbreitet, um die Heizkosten insbesondere in einem Mehrfamilienhaus entsprechend dem Verbrauch auf die verschiedenen Parteien zu verteilen und abzurechnen. Dazu sind die Heizkostenverteiler an den Heizkörpern des Hauses angebracht. Sie erfassen die von den einzelnen Heizkörpern abgegebene Wärmemenge. Die insgesamt entstehenden Heizkosten werden dann entsprechend einem Verteilschlüssel nach Grund- und Verbrauchskosten auf die Nutzeinheiten umgelegt.

In der Praxis werden im Wesentlichen zwei Typen von elektronischen Heizkostenverteilern (EHKV) verwendet, die als 2-Fühler- oder 3-Fühler-Heizkostenverteiler bezeichnet werden.

Die heute nur noch selten anzutreffenden 3-Fühler-Heizkostenverteiler berechnen aus der Vorlauftemperatur $\vartheta_{VL}$ und der Rücklauftemperatur $\vartheta_{RL}$ des Wärmeträgermediums sowie der Raumtemperatur $\vartheta_{Raum}$ die sogenannte logarithmische Übertemperatur $\Delta_{log}$

$$\Delta_{log} = \frac{\vartheta_{VL} - \vartheta_{RL}}{ln\left(\frac{\vartheta_{VL} - \vartheta_{Raum}}{\vartheta_{RL} - \vartheta_{Raum}}\right)},$$

Die abgegebene Wärmeleistung $\dot{Q}$ ergibt sich unter Verwendung der logarithmischen Übertemperatur $\Delta_{log}$ zu

$$\dot{Q} = \dot{Q}_N \cdot \left(\frac{\Delta_{log}}{\Delta_{log,N}}\right)^n,$$

wobei $\Delta_{log,N}$ die logarithmische Übertemperatur bei Referenzmassenstrom, $\dot{Q}_N$ die Referenzleistung des Heizköpers und $n$ der Heizkörperexponent ist. Diese Größen hängen von dem jeweils verwendeten Heizkörpertyp ab und werden durch die Heizköperhersteller bekannt gegeben oder bei einer Messung unter Referenzbedingungen, z.B. nach der Norm EN 442 bestimmt.

Die Verbrauchsanzeige $Z$ des Gerätes wird dann gebildet durch Integration der berechneten Werte für Wärmeleistung $\dot{Q}$ und ergibt daher einen Wert, der proportional ist zur Wärmeabgabe des Heizkörpers $Q = \int \dot{Q}dt$. Statt eines integralen Ansatzes zur Ermittlung der Wärmeabgabe des Heizkörpers $Q$ wird in der Praxis die in einem Zeitintervall $\Delta t$ abgegebene Wärmemenge $\Delta Q$ durch die Heizkostenverteiler ermittelt. Die in einem Zeitraum $T = \sum \Delta t$ abgegebene Wärmemenge $Q$ ergibt sich dann entsprechend aus der Summe der in diesem Zeitraum T in allen Zeitintervallen $\Delta t$ abgegebenen Wärmemenge $\Delta Q$, d.h. $Q = \sum \Delta Q$. Das der in einem Zeitintervall $\Delta t$ abgegebenen Wärmemenge $\Delta Q$ entsprechende Inkrement der Verbrauchsanzeige wird als Verbrauchsinkrement $\Delta Z$ bezeichnet, d.h. es gilt entsprechend für die Verbrauchsanzeige $Z = \sum \Delta Z$.

Im Rahmen dieser Beschreibung werden die Begriffe Verbrauchsinkrement pro Zeiteinheit $\Delta Z/\Delta t$ und Wärmeleistung $\dot{Q}$ insofern synonym verwendet, als die Wärmeleistung $\dot{Q}$ für das Zeitintervall $\Delta t$ als konstant angenommen wird. Mit anderen Worten wird eine diskrete Bestimmung der Verbrauchsinkremente $\Delta Z$ in den Zeitintervallen $\Delta t$ und eine Summation der Verbrauchsinkremente $\Delta Z$ über die Zeit für die Verbrauchsanzeige $Z = \sum \Delta Z$ einer kontinuierlichen Bestimmung der Wärmeleistung $\dot{Q}$ und einer Integration der Wärmeleistung $\dot{Q}$ über die Zeit in den Zeitintervallen $\Delta t$ zur Bestimmung der Wärmeabgabe $Q = \int \dot{Q} dt$ gleichgesetzt, d.h. es wird im Rahmen der Erfindung nicht zwischen einer zeitdiskreten und einer zeitkontinuierlichen Ermittlung der Wärmeabgabe unterschieden. Beide Möglichkeiten sollen durch die Erfindung abgedeckt und die jeweils zur Veranschaulichung verwendeten formelmäßigen Beschreibung gleichermaßen erfasst sein.

Je nach Bauform und konkreter Ausführung weichen die gemessenen Größen Vorlaufsensortemperatur $\vartheta_{VLS}$, Rücklauffühlertemperatur $\vartheta_{RLS}$ und Raumfühlertemperatur $\vartheta_{RS}$ von den eigentlich benötigten Größen Vorlauftemperatur $\vartheta_{VL}$, Rücklauftemperatur $\vartheta_{RL}$ und Raumtemperatur $\vartheta_{Raum}$ mehr oder weniger ab. Dieser Abweichung kann auf unterschiedliche Weise Rechnung getragen werden, so z.B. durch einen Kalibrationsfaktor $k_{sys}$,

$$\Delta_{log} \cong k_{sys} \cdot \frac{\vartheta_{VLS} - \vartheta_{RLS}}{ln\left(\frac{\vartheta_{VLS} - \vartheta_{RS}}{\vartheta_{RLS} - \vartheta_{RS}}\right)}.$$

2-Fühler-Heizkostenverteiler sind in der Praxis weitaus am weitesten verbreitet. Anders als die 3-Fühler-Heizkostenverteiler messen die 2-Fühler-Heizkostenverteiler eine Heizkörpertemperatur $\vartheta_{HS}$ auf der Heizkörperoberfläche und eine Raumlufttemperatur $\vartheta_{RS}$, die repräsentativ ist für die tatsächlichen Heizkörpertemperatur und Raumtemperatur $\vartheta_{Raum}$ sind, jedoch Messungenauigkeiten enthalten können, und berechnen hieraus näherungsweise die logarithmische Übertemperatur $\Delta_{log}$

$$\Delta_{log} \cong k_{sys} \cdot (\vartheta_{HS} - \vartheta_{RS}).$$

Daraus ergibt sich die aktuelle Wärmeleistung $\dot{Q}$ zu

$$\dot{Q} = \dot{Q}_N \cdot \left(k_{sys} \cdot (\vartheta_{HS} - \vartheta_{RS})\right)^n = \dot{Q}_N \cdot k_{sys}^n \cdot (\vartheta_{HS} - \vartheta_{RS})^n$$

$$\dot{Q} = k_{ges} \cdot (\vartheta_{HS} - \vartheta_{RS})^n,$$

bzw. mit der üblichen Bezeichnung $\Delta_{EHKV} := (\vartheta_{HS} - \vartheta_{RS})$

$$\dot{Q} = k_{ges} \cdot \Delta_{EHKV}^n,$$

wobei $k_{ges} = \dot{Q}_N \cdot k_{sys}^n$ ein Faktor ist, der sowohl die Referenzleistung $\dot{Q}_N$ als auch mit $k_{sys}$ den Wärmeübergang zwischen dem Heizkörper und der Luft auf die jeweiligen Temperaturfühler, sowie Geräteeigenschaften berücksichtigt. Dieser Faktor $k_{ges} = \dot{Q}_N \cdot k_{sys}^n$ ist für den verwendeten Heizköper und Heizkostenverteiler bekannt.

Die Definition der Faktoren $k_{ges}$, $k_{sys}$ kann je nach konkreter Implementierung von den in dieser Beschreibung gegebenen Formeln abweichen. Die Erfindung hängt jedoch nicht von der formelmäßigen Implementierung ab und erstreckt sich auf alle Varianten von Faktoren, die aus den genannten Temperaturen die Wärmeabgabe berechnen. Die konkret beschriebenen Formeln dienen der Veranschaulichung. Der Fachmann versteht, dass die Definition der einzelnen Faktoren dafür auch anders beschrieben werden kann.

Die Verbrauchsanzeige $Z$ der 2-Fühler-Heizkostenverteiler wird durch Integration des berechneten Verlaufs für $\dot{Q}$ bzw. durch zeitlich gewichtete Summation der berechneten Werte der Verbrauchsinkremente $\Delta Z$ proportional zur

Wärmeabgabe des Heizkörpers $Q = \int \dot{Q}\, dt$ bzw. $Z = \sum \Delta Z$ gebildet.

Durch ergänzende algorithmische Bedingungen zur Erfüllung von Anforderungen der Produktnorm DIN EN 834, wie beispielsweise Zählbeginn-Übertemperatur $\Delta t_Z$, Heizbetriebserkennung, Unterdrückung von Sommerzählung durch Fremdwärme oder Manipulationsschutz, weicht die Verbrauchsanzeige $Z$ zusätzlich von einem Proportionalwert zur tatsächlichen Wärmeabgabe ab.

Statt des heizkörperspezifischen Exponenten $n$, der bei der Referenzmessung nach einem festgelegten Verfahren ermittelt wird und meist im Bereich von 1,1 bis 1,5 liegt, wird häufig ein konstanter Wert von z.B. $n_{konst} = 1,3$ verwendet.

Die Gerätefaktoren $k_{sys}$ bzw. $k_{ges} = \dot{Q}_N \cdot k_{sys}{}^n \cdot K_T$ entsprechen dabei den in der Produktnorm DIN EN 834 als Korrekturfaktoren bezeichneten Bewertungsfaktoren $K_Q, K_C, K_T$:

$$\dot{Q}_N \sim K_Q$$

$$k_{sys}{}^n \sim K_C$$

$$k_{ges} \sim K_Q \cdot K_C \cdot K_T$$

Dabei dient der Bewertungsfaktor $K_Q$ gemäß Norm der Berücksichtigung der Heizkörperreferenzleistung und der Bewertungsfaktor $K_C$ der unterschiedlichen thermischen Ankopplung des Gerätes an Heizkörper- und Raumluft.

Der Bewertungsfaktor $K_T$ wird gemäß der Produktnorm DIN EN 834 bei sogenannten 1-Fühlergeräten zusätzlich angewendet, um eine zusätzliche Korrektur bei niedrigen Auslegungs-Raumlufttemperaturen zu ermöglich. Die 1-Fühlergeräte arbeiten ohne Messung der Raumlufttemperatur.

Im Folgenden wird meist diese der Produktnorm entsprechende Definition verwendet, ohne dass die Erfindung auf genau diese Definition beschränkt ist.

Das grundlegende Prinzip der Heizkostenverteiler besteht darin, die Wärmeleistung unter Verwendung gemessener Temperaturen, nicht jedoch mittels eines gemessenen Massestroms $\dot{m}$ respektive des Volumenstrom $\dot{V}$ des Wärmeträgermediums, zu bestimmen. Hierfür wäre der Einbau eines entsprechenden Durchflusszählers in das Rohrleitungssystem bspw. vor dem Heizkörper notwendig, was die Installation einer Heizkostenerfassung sehr aufwendig und teuer machen würde.

Heizkostenverteiler sind daher auch regulatorisch von Wärmezählern unterschieden. Heizkostenverteiler, die der Produktnorm DIN EN 834 entsprechen und deren Konformität von einer sachverständigen Stelle geprüft und bescheinigt wird, unterliegen nicht den eichrechtlichen Vorschriften bzw. den Bestimmungen für Wärmezähler der europäischen Messgeräterichtlinie MID, sondern dürfen ohne weiteres nach der Heizkostenverordnung zur Verbrauchserfassung verwendet werden. Geräte, die den Massestrom $\dot{m}$ respektive den Volumenstrom $\dot{V}$ des Wärmeträgermediums messen, müssen demgegenüber die Anforderungen an Wärmezähler erfüllen. Für diese gelten neben hohen Anforderungen an die Messgenauigkeit auch Eichfristen von 5 Jahren.

Heizkostenverteilern gemein ist die Abhängigkeit von der Kenntnis und Konstanz der zur Wärmeleistungsberechnung benötigten heizkörperspezifischen (d.h. von dem Heizkörpertyp abhängigen) Größen $k_{ges} \sim K_Q \cdot K_C \cdot K_T$ bzw. $\dot{Q}_N, k_{sys}, n$. Daher führen Abweichungen der realen Betriebssituation von der Situation der Referenzmessung, bei der die Bewertungsfaktoren bestimmt wurden, zu Abweichungen der berechneten Wärmeleistung von der tatsächlichen. Das betrifft die Einbausituation des Heizkörpers, wie beispielsweise Heizkörperverkleidungen, Vorhänge oder zur Trocknung aufgelegte Handtücher. Besondere Fehlerquellen sind Heizkörper mit Luftklappen, Gebläsen oder manuell bzw. thermostatisch zugeschalteten Heizelementen.

Bei 2-Fühler-Heizkostenverteilern kommt gegenüber 3-Fühler-Heizkostenverteilern noch eine weitere systematische Fehlerquelle hinzu. Während 3-Fühler-Heizkostenverteiler sämtliche für die Bestimmung der logarithmischen Übertemperatur benötigten Größen $\vartheta_{VL}, \vartheta_{RL}, \vartheta_{Raum}$ messtechnisch erfassen, wird bei 2-Fühler-Heizkostenverteilern neben der Raumlufttemperatur $\vartheta_{Raum}$ lediglich eine weitere repräsentative Temperatur auf der Heizkörperoberfläche am Montagepunkt des Temperatursensors gemessen. Da der Verlauf der Oberflächentemperatur zwischen Vorlauf- und Rücklaufanschluss im Allgemeinen keine lineare Funktion darstellt, gibt es keinen Punkt auf der Heizkörperoberfläche,

$$(\vartheta_{HS} - \vartheta_{RS}) \sim \Delta_{log} = \frac{\vartheta_{VL} - \vartheta_{RL}}{ln\left(\frac{\vartheta_{VL} - \vartheta_{Raum}}{\vartheta_{VL} - \vartheta_{Raum}}\right)}$$

für den die Beziehung bei allen Betriebszuständen gilt. Die Temperatur auf der Heizkörperoberfläche zwischen Vor- und Rücklaufanschluss verläuft unter der Annahme von oberem Vorlaufanschluss und unterem Rücklaufanschluss näherungsweise wie

$$\vartheta_x = \vartheta_{Raum} + (\vartheta_{VL} - \vartheta_{Raum})^{(1-x)} \cdot (\vartheta_{RL} - \vartheta_{Raum})^x.$$

Die Größe *x* ist hierbei eine dimensionslose Koordinate für den Abstand *X* vom Vorlaufanschluss bei einem Gesamtabstand *H* zwischen Vor- und Rücklaufanschluss *x = X/H*. Die Größe (1 - *x*) wird auch als relative Montagehöhe *h* bezeichnet. Die mittlere Übertemperatur auf der Heizkörperoberfläche ist im Falle dieses Temperaturverlaufs gerade das logarithmisch Mittel $\Delta_{log}$.

Die Koordinate $x_{ideal}$, bei der die Beziehung $\vartheta_x$ - $\vartheta_{Raum}$ = $\Delta_{log}$ gilt, liegt bei sehr großen Masseströmen des Heizmediums nahe bei *x* = 0,5 und wandert mit kleiner werdendem Durchfluss (Massestrom) nach "oben" in Richtung Vorlaufanschluss. Ein in halber Bauhöhe bei *x* = 0,5 montierter 2-Fühler-Heizkostenverteiler würde daher bei den meist auftretenden Betriebszuständen viel zu wenig Wärmeleistung ermitteln. Daher werden diese 2-Fühler-Heizkostenverteiler üblicherweise im Bereich *x* = 0,33 ... 0,25 entsprechend einer relativen Montagehöhe *h* = 0,66 ...0,75 montiert. In der Fachwelt ist bekannt, dass bei Montage in diesem Bereich im Mittel über alle Betriebszustände ein akzeptabler Kompromiss für die Anzeigeabweichung über den Abrechnungszeitraum erreicht wird, was so auch in die Produktnorm DIN EN 834 eingeflossen ist.

Allerdings treten in konkreten Betriebszuständen der Heizkostenverteiler ggf. recht große Abweichungen des die Anzeigegeschwindigkeit definierenden Verbrauchsinkrements $\Delta Z$ von der im zugehörigen Zeitintervall $\Delta t$ abgegebenen Wärmemenge $\Delta Q$ auf. Die durch das Verhältnis der berechneten Wärmeleistung $\dot{Q}_{berechnet}$ = $\Delta Z/\Delta t$ zu der tatsächlichen Wärmeleistung $\dot{Q}_{tatsächlich}$ des Heizkörpers in dem aktuellen Betriebspunkt definierte aktuelle Empfindlichkeit weicht also von einem Idealwert $E_{soll}$ = 1 ab, d.h.

$$E = \frac{\dot{Q}_{berechnet}}{\dot{Q}_{tatsächlich}} = \frac{\Delta Z}{\dot{Q} \cdot \Delta t} = \frac{\Delta Z}{\Delta Q} \neq 1.$$

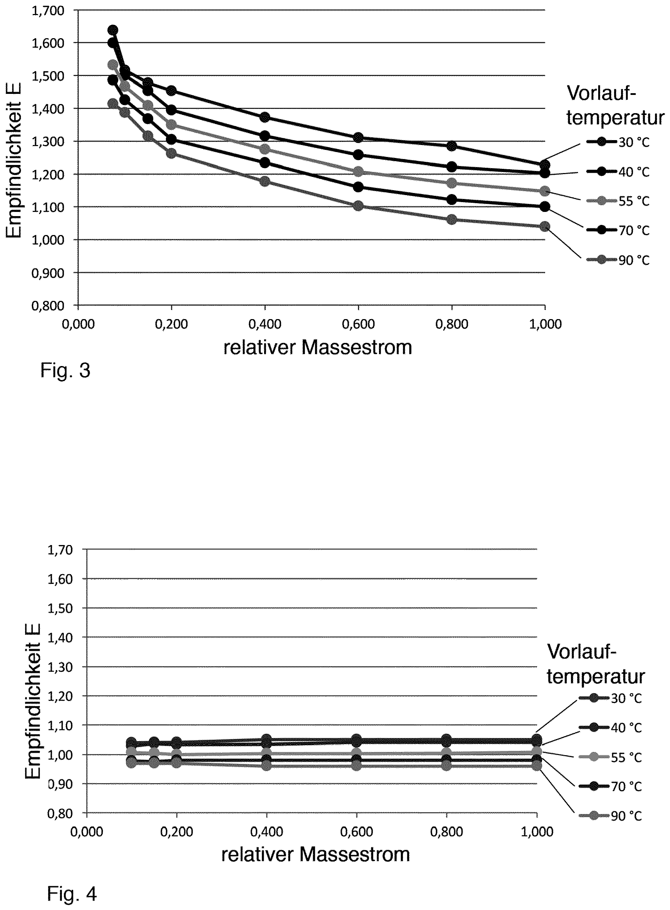

Der Betriebspunkt eines Heizkörpers ist im Allgemeinen determiniert durch den Wert von mindestens drei der vier Größen $\vartheta_{VL}, \vartheta_{RL}, \vartheta_{Raum}, \dot{m}$. Unterscheiden sich die Betriebspunkte des Heizkörpers innerhalb einer Heizungsanlage nennenswert, was gerade bei (thermostatischem oder elektronischen) Einzelraum-Temperaturregelungen an den einzelnen Heizkörpern durchaus vorkommt, können daher auch bei normkonformem Montagepunkt sehr große Mess- und damit Verteilabweichungen auftreten. Dies ist Fig. 3 zu entnehmen.

In diesem Zusammenhang ist aus der EP 1 770 469 B1 ein Verfahren zur Bestimmung von Wärmekenndaten eines Heizkörpers bekannt, bei dem die Heizkörperoberflächentemperatur und die Raumtemperatur gemessen und mit einer Korrekturgröße in die gewünschten Wärmekenndaten umgerechnet werden, wobei die Korrekturgröße von dem aktuellen Arbeitspunkt des Heizkörpers abhängt, welcher durch die gemessene Heizkörpervorlauftemperatur bestimmbar ist. Die Korrekturgröße ist dann von der Heizkörperübertemperatur, welche durch die Differenz der Heizkörpertemperatur und der Raumtemperatur gebildet wird, und von der Heizkörpervorlauftemperatur abhängig.

Nachteilig hierbei ist, dass für eine genaue Erfassung der Wärmeabgabe durch einen Heizköper mit einem 2-Fühler-Heizkostenverteiler dessen Betriebspunkt exakt ermittelt werden muss. Dies erfordert die Kenntnis wenigstens einer weiteren heizkörperspezifischen Messgröße, die unabhängig von dem Heizkostenverteiler gemessen bzw. aus gemessenen Werten ermittelt werden muss.

Aus der DE 10 2005 045 198 B3 (EP1770469) sind ein Verfahren und eine Vorrichtung zur Bestimmung von Wärmekenndaten eines Heizkörpers bekannt, bei denen die Heizkörpertemperatur und die Raumtemperatur gemessen und mit einer Korrekturgröße in die gewünschten Wärmekenndaten umgerechnet werden. Um möglichst universell einsetzbare Korrekturgrößen zu erhalten, hängt die Korrekturgröße von dem aktuellen Arbeitspunkt des Heizkörpers ab, welcher durch die Heizkörpervorlauftemperatur, die Heizkörperrücklauftemperatur, die Heizkörperumgebungstemperatur, den Heizkörpermassenstrom und/oder die Heizkörperventilstellung bestimmbar ist.

Die EP 1 376 084 A2 beschreibt ein Verfahren zur Ermittlung eines der Normleistung eines Heizgeräts entsprechenden Bewertungsfaktors, wobei das Heizgerät einen Heizkörper und ein Gebläse umfasst, und wobei der Bewertungsfaktor in Abhängigkeit von dem Betriebszustand des Heizgeräts ermittelt wird. Die Erfindung betrifft weiterhin einen Heizkostenverteiler für die Durchführung eines derartigen Verfahrens sowie ein Heizgerät mit einem derartigen Heizkostenverteiler.

Die DE 10 2005 032 834 A1 betrifft ein Verfahren zur Erfassung des Heizwärmeverbrauchs an Heizkörpern mittels elektronischen Heizkostenverteilern, wobei eine Zählung des Heizwärmeverbrauchs bei einem Heizkostenverteiler in Abhängigkeit von einer Startbedingung einsetzt und wobei die Startbedingung eines Heizkostenverteilers bei dessen Montage an einem Heizkörper festgelegt wird. Weiterhin wird ein Heizkostenverteiler zur Erfassung des Heizwärmeverbrauchs an Heizkörpern beschrieben, wobei im Heizkostenverteiler wenigstens eine Startbedingung gegeben ist, ab der der Heizkostenverteiler beginnt, den Heizwärmeverbrauch zu zählen. Es ist vorgesehen, dass eine Startbedingung bei der Montage des Heizkostenverteilers am Heizkörper festlegbar ist und/oder am montierten Heizkostenverteiler änderbar ist.

Aufgabe der Erfindung ist es, beispielsweise mittels einer Vorrichtung zur Erfassung der Wärmeleistung eines Heizkörpers, die zur Messung von den heizkörperspezifischen Messgrößen insbesondere nur einen Heizkörpertemperatursensor und einen Raumlufttemperatursensor aufweist (und keine Sensoren zur Messung der Vorlauftemperatur, der Rücklauftemperatur und/oder des Massestroms aufweist oder eine Möglichkeit zur Eingabe dieser Größen vorsieht), eine höhere Genauigkeit der ermittelten Wärmeabgabe, insbesondere also der Wärmeabgabe bzw. Wärmeleistung, in allen Betriebspunkten des Heizkörpers zu erreichen.

Diese Aufgabe wird erfindungsgemäß mit einem Verfahren einem Verfahren nach Anspruch 1 und einer Vorrichtung nach Anspruch 14 gelöst.

Bei einem Verfahren mit den eingangs beschriebenen bekannten Merkmalen ist dazu insbesondere vorgesehen, dass ein Roh-Verbrauchsinkrement $\Delta Z_{roh}(\Delta_{EHKV})$ als (gemäß einer bevorzugten Ausführung ggf. monoton steigender) funktionaler Zusammenhang zwischen dem Roh-Verbrauchsinkrement $\Delta Z_{roh}$ (als Funktionsergebnis) und einer zumindest die Heizkörpertemperatur $\vartheta_{HS}$ berücksichtigenden Temperaturgröße $\Delta_{EHKV}$ gebildet wird. Gemäß einer besonders bevorzugten Ausführungsform wird als Temperaturgröße die aus der Differenz der erfassten Heizkörpertemperatur $\vartheta_{HS}$ und Raumlufttemperatur $\vartheta_{RS}$ gebildeten Temperaturdifferenz $\Delta_{EHKV} = \vartheta_{HS} - \vartheta_{RS}$ berechnet und verwendet. Zur besseren Lesbarkeit des nachfolgenden Textes werden die Größen "Temperaturgröße $\Delta_{EHKV}$" und "Temperaturdifferenz $\Delta_{EHKV}$" im Folgenden synonym verwendet, d.h. der Begriff "Temperaturdifferenz $\Delta_{EHKV}$" soll auch den allgemeineren Begriff "Temperaturgröße $\Delta_{EHKV}$" mit umfassen, der insbesondere in den Ansprüchen verwendet wird. In den Ansprüchen kann der Begriff "Temperaturgröße $\Delta_{EHKV}$" entsprechend auch "Temperaturdifferenz $\Delta_{EHKV}$" bedeuten. Vorzugsweise berücksichtigt das Roh-Verbrauchsinkrement $\Delta Z_{roh}(\Delta_{EHKV})$ keine andere Abhängigkeit von einer Messgröße, die nicht die Heizkörpertemperatur $\vartheta_{HS}$ und/oder die Raumlufttemperatur $\vartheta_{RS}$ ist.

Der gemäß einer bevorzugten Ausführung des vorgeschlagenen Verfahrens angewandte monoton steigende funktionale Zusammenhang kann einfacher Weise die Temperaturgröße $\Delta_{EHKV}$ selbst oder eine unkorrigiert berechnete, aktuelle Wärmeleistung $\dot{Q}_{unkorr}$ des Heizkörpers sein. Grundsätzlich kann aber jeder im mathematischen Sinne monoton steigende Zusammenhang gewählt werden, beispielsweise eine exponentielle Abhängigkeit $\Delta_{EHKV}^{n}$, wobei $n$ eine beliebige reelle Zahl, bspw. der Heizkörperexponent, sein kann.

Das Roh-Verbrauchsinkrement $\Delta Z_{roh}(\Delta_{EHKV})$ wird erfindungsgemäß mittels einer Korrekturgröße $k_{korr}$ durch eine rechnerische Verknüpfung $f_1$ in ein korrigiertes endgültiges Verbrauchsinkrement $\Delta Z = f_1(\Delta Z_{roh}(\Delta_{EHKV}), k_{korr}(\Delta_{EHKV}))$ so umgerechnet, dass eine als das Verhältnis von Verbrauchsinkrement $\Delta Z$ zu tatsächlicher Wärmeabgabe $\dot{Q} \cdot \Delta t$ des Heizkörpers in dem Zeitintervall $\Delta t$ definierte Empfindlichkeit $E$ einem Zielverlauf $E_{Ziel}$ folgt. Der Zielverlauf $E_{Ziel}$ kann im einfachsten Fall durch einen konstanten Empfindlichkeitssollwert $E_{soll}^{konst}$ vorgegeben sein.

Der konstante Empfindlichkeitssollwert $E_{soll}^{konst}$ kann also definiert sein als

$$E_{Ziel} = E_{soll}^{konst} = \frac{\Delta Z}{\dot{Q} \cdot \Delta t} = \frac{f_1(\Delta Z_{roh}(\Delta_{EHKV}), k_{korr}(\Delta_{EHKV}))}{\dot{Q} \cdot \Delta t},$$

wobei bzw. wozu die Korrekturgröße $k_{korr}(\Delta_{EHKV})$ in Abhängigkeit von der Temperaturdifferenz $\Delta_{EHKV}$ als Kennfunktion abgelegt ist, d.h. anders ausgedrückt als Funktion $k_{korr}(\Delta_{EHKV})$. Die Kennfunktion ist also eine Funktion der Temperaturdifferenz $\Delta_{EHKV}$.

Anstelle des konstanten Empfindlichkeitssollwerts $E_{soll}^{konst}$ kann der Zielverlauf $E_{Ziel}$ auch als eine Funktion des Empfindlichkeitssollwerts $E_{soll} = f(w)$ definiert sein, der sich bspw. als Funktion von der Temperaturdifferenz $\Delta_{EHKV}$, als Funktion des Massestroms $\dot{m}$ des Wärmeträgermediums, als Funktion der Vorlauftemperatur $\vartheta_{VL}$ des Wärmeträgermediums oder durch einen anderen funktionellen Zusammenhang (ggf. durch ein Empfindlichkeitswert-Kennfeld vorgegeben) für die Größe $w$ beschrieben sein. Bei einer Abhängigkeit der Empfindlichkeitssollwertfunktion $E_{soll}$ von dem Massestrom $\dot{m}$ ist es sinnvoll, den Massestrom $\dot{m}$ auf den Nennmassestrom $\dot{m}_N$ des jeweiligen Heizkörpers zu normieren, d.h. die funktionelle Abhängigkeit von dem Quotienten $\dot{m}/\dot{m}_N$ zu beschreiben. Beispielhaft wird nachfolgend ein Zielverlauf $E_{Ziel}$ mit einer Abhängigkeit der Empfindlichkeitssollwertfunktion $E_{soll} = f(w)$ von $\Delta_{EHKV}$ dargestellt

$$E_{Ziel} = E_{soll}(\Delta_{EHKV}) = \frac{\Delta Z}{\dot{Q} \cdot \Delta t} = \frac{f_1\big(\Delta Z_{roh}(\Delta_{EHKV}), k_{korr}(\Delta_{EHKV})\big)}{\dot{Q} \cdot \Delta t},$$

wobei erfindungsgemäß wie vorbeschrieben natürlich auch andere Abhängigkeiten eingesetzt werden können.

Durch den Zielverlauf $E_{Ziel}$ wird erfindungsgemäß eine Schwankung der Empfindlichkeit $E$ um den angestrebten Empfindlichkeitswerts $E_{soll}$ (d.h. den konstanten Empfindlichkeitssollwert $E_{soll}^{konst}$ oder die Empfindlichkeitssollwertfunktion $E_{soll} = f(w)$) beschrieben, bspw. den konstanten Wert $E_{soll}^{konst} = 1$. Erfindungsgemäß wird dies durch Anwendung des Verfahrens zur Ermittlung des Korrekturfaktors erreicht, indem die erreichte Empfindlichkeit in einen Korridor $E_{soll} \pm \delta_E$ um den angestrebten Empfindlichkeitswert $E_{soll}$ schwankt, bspw. mit einer Schwankungsbreite von bis zu 10%, bis zu 20% oder bis zu 30% den Empfindlichkeitswert $E_{soll}$ einhält. Die Schwankungsbreite kann durch die Art der Ermittlung des Korrekturwerts beeinflusst werden und ergibt sich aus der Anwendung des erfindungsgemäßen Verfahrens.

Das korrigierte Verbrauchsinkrement $\Delta Z$ entspricht dann also der entsprechend dem Zielverlauf $E_{Ziel}$ gewünschten Empfindlichkeit des Heizkostenverteilers. Das bereits beschriebene Aufsummieren des Verbrauchsinkrements $\Delta Z$ der Verbrauchsanzeige $Z$ kann zur Ermittlung der Wärmeabgabe $Q$ des Heizkörpers verwendet werden.

Die Kennfunktion kann bspw. als ein- oder mehrdimensionales Werte- oder Kennfeld, als ein Graph, als eine Funktionsbeschreibung oder als eine Tabelle (Wertetabelle oder mathematischer ausgedrückt als ein Vektor) definiert sein, die die Korrekturgröße $k_{korr}$ in Abhängigkeit von der erfassten Temperaturdifferenz $\Delta_{EHKV}$ (gebildet aus den erfassten Temperaturwerten Heizkörpertemperatur und/oder Raumlufttemperatur) vorgibt. Diese Temperaturdifferenz $\Delta_{EHKV}$ wird in Heizkostenverteilern üblicherweise zur Ermittlung des Anzeigefortschritts bzw. Verbrauchsinkrements $\Delta Z$ herangezogen und eignet sich daher besonders gut für die Ermittlung der Korrekturgröße $k_{korr}$. Eine Messung anderer Parameter findet nicht statt, insbesondere keine Messung oder Erfassung von Vorlauftemperatur, Rücklauftemperatur und/oder Massestrom.

Durch die Korrekturgröße $k_{korr}$ wird die Empfindlichkeit des Heizkostenverteilers so eingestellt, dass sie für alle Betriebspunkte des Heizkostenverteilers bzw. der Vorrichtung zur Erfassung der Wärmeabgabe innerhalb bestimmter Genauigkeitsgrenzen gleich ist.

Wie bereits erläutert, ergibt sich die aktuelle Empfindlichkeit in einem Betriebspunkt des Heizkörpers durch den Quotienten des Verbrauchsinkrements $\Delta Z$ (als kleinste messbare Einheit des Verbrauchsfortschritts in einem Zeitintervall $\Delta t$) zu der aktuellen Wärmeleistung des Heizkörpers (in derselben Zeiteinheit) gemäß der Gleichung

$$E = \frac{\Delta Z}{\dot{Q} \cdot \Delta t},$$

wobei die aktuelle Wärmeleistung $\dot{Q}$ in dieser Notation als näherungsweise konstant innerhalb des Zeitintervalls $\Delta t$ angesehen wird. Diese Näherung ist für die Messung der Wärmeabgabe der Heizkörper durch reale Heizkostenverteiler zulässig.

Entsprechend ist eine mittlere Empfindlichkeit $E_{mittel}$ definiert als Verhältnis von Verbrauchsanzeige $Z = \sum \Delta Z$ (als Integration über die bzw. Summe der Verbrauchsinkremente) zu der tatsächlichen Wärmeabgabe des Heizkörpers $Q = \int \dot{Q} dt$ (als zeitliche Integration über die jeweils aktuelle Wärmleistung des Heizkörpers) für den Betrachtungszeitraum $T = \sum \Delta t$, d.h. als

$$E_{mittel} = \frac{Z}{Q}.$$

Sie gibt an, wie stark die Verbrauchsanzeige $Z$ (entsprechend der durch den Heizkostenverteiler berechneten Wärmemenge) einer Vorrichtung zur Erfassung der Wärmeabgabe eines Heizkörpers von der tatsächlichen (d.h. einer exakt bestimmten) Wärmeabgabe $Q$ abweicht.

Im stationären Fall, d.h. wenn keine zeitliche Veränderung des Werts des Verbrauchsinkrements $\Delta Z$ und des

$$E_{mittel} = \frac{Z}{Q} = \frac{\Delta Z}{\dot{Q} \cdot \Delta t} = E$$

Werts der aktuellen Wärmeleistung $\dot{Q}$ auftritt, sind die Quotienten gleich, d.h. die momentane Empfindlichkeit entspricht der mittleren Empfindlichkeit).

Die exakt bestimmte Wärmeleistung $\dot{Q}$ ist definiert durch die Vorlauftemperatur, die Rücklauftemperatur und den Massestrom bzw. den Volumenstrom und kann bspw. in einem Messstand für einen Heizkörpertyp abhängig von seinem Betriebspunkt ermittelt werden (bspw. mit einem Wärmezähler). Statt einer Messung auf einem Messstand kann hier grundsätzlich auch eine Simulation verwendet werden. Je nach Betriebspunkt des Heizkörpers weicht das durch einen Heizkostenverteiler mit ausschließlich zwei Temperatursensoren erfasste Verbrauchsinkrement $\Delta Z$ von der exakt bestimmten Wärmeleistung $\dot{Q}$ ab.

Der Betriebspunkt des Heizkörpers ist messtechnisch erst dann eindeutig bestimmt, wenn drei der vier Messgrößen Vorlauftemperatur, Rücklauftemperatur, Raumtemperatur und Massestrom bzw. Volumenstrom oder entsprechende von diesen Messgrößen abgeleitete oder ableitbare Größen bekannt sind.

Damit kann bei Verwendung von lediglich zwei Temperaturmesswerten für die Erfassung der Wärmeabgabe des Heizkörpers dessen Betriebspunkt nicht exakt bestimmt werden, und es kommt so zu Schwankungen der Empfindlichkeit $E$ bei der Erfassung der Wärmeabgabe. Die erfindungsgemäß vorgeschlagene Korrekturgröße gleicht genau diese Schwankungen in der Empfindlichkeit $E$ (im Rahmen der erreichbaren Genauigkeit, d.h. unter Berücksichtigung der erreichten Genauigkeit $E_{Ziel} = E_{soll} \pm \delta_E$) aus und gibt einen Korrekturwert vor, der vorzugsweise nur von den erfassten Temperaturwerten $\vartheta_{HS}, \vartheta_{RS}$ bzw. der Temperaturdifferenz $\Delta_{EHKV}$ abhängt, d.h. durch die erfassten Temperaturwerte $\vartheta_{HS}, \vartheta_{RS}$ bzw. die Temperaturdifferenz $\Delta_{EHKV}$ eindeutig bestimmt ist.

Erfindungsgemäß kann die Temperaturdifferenz $\Delta_{EHKV}$ unmittelbar der Differenz der erfassten Heizkörpertemperatur $\vartheta_{HS}$ und der erfassten Raumlufttemperatur $\vartheta_{RS}$ entsprechen, d.h. $\Delta_{EHKV} = \vartheta_{HS} - \vartheta_{RS}$, oder einer mit einem Bewertungsfaktor $k_{bewertet}$ bewerteten Temperaturdifferenz, d.h. $\Delta_{EHKV} = k_{bewertet} \cdot (\vartheta_{HS} - \vartheta_{RS})$. Der Bewertungsfaktor $k_{bewertet}$ kann konstant sein oder seinerseits von bestimmten Parametern, wie bspw. dem Montageort des Heizkostenverteilers an dem Heizkörper, abhängen. Das Anwendungsprinzip des erfindungsgemäßen Verfahrens wird durch einen solchen (konstanten oder von bestimmten Parametern abhängigen) Bewertungsfaktor $k_{bewertet}$ nicht geändert.

Die Kennfunktion der Korrekturgröße $k_{korr}(\Delta_{EHKV})$ kann insbesondere für verschiedene Heizkörpertypen in einem Messstand oder durch eine Simulation bestimmt werden bzw. worden sein. Die so vorab ermittelte Kennfunktion kann dann in einem Heizkostenverteiler hinterlegt sein. Beispielsweise lässt sich eine Kennfunktion wie folgt als Polynomfunktion parametrieren

$$k_{korr}(\Delta_{EHKV}) = a_0 + a_1 \cdot \Delta_{EHKV} + a_2 \cdot \Delta_{EHKV}^2 + \cdots .$$

Allerdings ist, wie bereits beschrieben, die Kennfunktion nicht auf eine bestimmte Funktionsbeschreibung für die Korrekturgröße beschränkt, sondern umfasst auch andere Funktionsbeschreibungen sowie Graphen, Kennfelder oder andere Größen. Auch eine Kombination von Kennfeld und Funktionsbeschreibung ist möglich. Für die vorstehende Gleichung könnte ein Kennfeld bspw. wie folgt aussehen $(a_0, a_1, a_2, ...)$.

Entsprechend einer bevorzugten Ausführungsform des beschriebenen Verfahrens kann bei der Ermittlung der Korrekturgröße kann vorgesehen sein, dass

- eine Betriebspunkt-Korrekturgröße $k_{korr}^{k,j}(\dot{m}_k, \vartheta_{VL,j})$ und eine Betriebspunkt-Temperaturdifferenz (bzw. allgemeiner: Betriebspunkt-Temperaturgröße) $\Delta_{EHKV}^{k,j}(\dot{m}_k, \vartheta_{VL,j})$ bei verschiedenen Betriebspunkten $[\dot{m}_k, \vartheta_{VL,j}]$ des Heizkörpers ermittelt wird sowie

- eine der Abhängigkeiten Massestrom m oder Vorlauftemperatur $\vartheta_{VL}$ in der Betriebspunkt-Korrekturgröße $k_{korr}^{k,j}(\dot{m}_k, \vartheta_{VL,j})$ und der Betriebspunkt-Temperaturdifferenz $\Delta_{EHKV}^{k,j}(\dot{m}_k, \vartheta_{VL,j})$ ausgemittelt wird.

Die Betriebspunkte $[\dot{m}_k, \vartheta_{VL,j}]$ des Heizkörpers sind durch diskrete Massestromwerte $\dot{m}_k$ des Massestroms $\dot{m}$ und diskrete Vorlauftemperaturwerte $\vartheta_{VL,j}$ der Vorlauftemperatur $\vartheta_{VL}$ definiert. Die Begriffe "Betriebspunkt-Temperaturdifferenz $\Delta_{EHKV}^{k,j}$" und "Betriebspunkt-Temperaturgröße $\Delta_{EHKV}^{k,j}$" werden im Folgenden in gleicher Weise synonym verwendet, wie dies für die Temperaturdifferenz $\Delta_{EHKV}$ und die Temperaturgröße $\Delta_{EHKV}$ erfolgt.

Für ein Raster von Betriebspunkten $[\dot{m}_k, \vartheta_{VL,j}]$ werden

(a) die tatsächliche aktuelle Wärmeleistung Q bspw. mit einem Wärmezähler durch Erfassen der Vorlauftemperatur, der Rücklauftemperatur und des Massestroms,

(b) die Betriebspunkt-Temperaturdifferenz $\left(\Delta_{EHKV}^{k,j}\left(\dot{m}_k, \vartheta_{VL,j}\right)\right)$ durch die Vorrichtung zur Erfassung der Wärmeleistung (Heizkostenverteiler) mittels Erfassen der Temperaturdifferenz $\Delta_{EHKV}$, und

(c) das Roh-Verbrauchsinkrement $(\Delta Z_{roh}(\Delta_{EHKV}))$ der an dem Heizkörper montierten Vorrichtung zur Erfassung der Wärmeleistung

erfasst.

Die Betriebspunkt-Korrekturgröße $k_{korr}^{k,j}\left(\dot{m}_k, \vartheta_{VL,j}\right)$ wird dann aus der Randbedingung derart abgeleitet, dass für alle Betriebspunkte $[\dot{m}_k, \vartheta_{VL,j}]$ des Heizkörpers das Verhältnis von Verbrauchsinkrement $\Delta Z = f_1(\Delta Z_{roh}(\Delta_{EHKV}), k_{korr}(\Delta_{EHKV}))$ zu tatsächlicher Wärmeleistung $\dot{Q}$ des Heizkörpers dem Zielverlauf $E_{Ziel}$ entspricht, d.h. die Beziehung

$$E_{Ziel} := \frac{f_1(\Delta Z_{roh}(\Delta_{EHKV}), k_{korr}(\Delta_{EHKV}))}{\dot{Q} \cdot \Delta t}$$

gilt. Hierdurch liegt die erreichte Empfindlichkeit $E$ innerhalb des Zielverlaufs $E_{Ziel}$.

Die so ermittelten Korrekturgrößen $k_{korr}^{k,j}$ können die Kennfunktion für ein System aus Heizkörper bzw. Heizkörpertyp und Heizkostenverteiler bilden, und werden dem Heizkostenverteiler abgelegt. Mit anderen Worten hängen diese Korrekturgrößen sowohl von dem konkreten Heizkörper oder Heizkörpertyp als auch von dem konkretem Heizkostenverteiler ab.

Das Ablegen der ermittelten Korrekturgrößen $k_{korr}^{k,j}$ bzw. der Kennfunktion kann bspw. bei der Inbetriebnahme des Heizkostenverteilers an einem konkreten Heizkörpertyp erfolgen. Alternativ ist es auch möglich, die vorab so ermittelten Heizkörpertyp-abhängigen Kennfunktionen alle in parametrierter Form (Funktionsbeschreibung, Kennfeld oder dgl.) in einem Heizkostenverteiler zu speichern und bei der Installation des Heizkostenverteilers einen Heizkörpertyp-abhängigen Parameter auswählen, damit der Heizkostenverteiler bei der Erfassung der Wärmeabgabe auf die dem Heizkörpertyp entsprechende Kennfunktion zugreift. Diese Korrekturgrößen $k_{korr}^{k,j}$ hängen allerdings noch von dem Massestrom $\dot{m}_k$ und der Vorlauftemperatur $\vartheta_{VL,j}$ im Betriebspunkt ab.

Das erfindungsgemäß vorgeschlagene Herausmitteln der Abhängigkeiten kann vorzugsweise derart erfolgen, dass bei dem Ausmitteln der Abhängigkeit von der Vorlauftemperatur $\vartheta_{VL}$ für jeweils einen der diskreten (fest vorgegebenen) Massestromwerte $\dot{m}_k$ ein Temperaturdifferenz-Mittelwert $\overline{\Delta}_{EHKV}^k$ über die verschiedenen Vorlauftemperaturwerte $\vartheta_{VL,j}$ gebildet wird.

Mathematischer ausgedrückt wird also der Mittelwert der Temperaturdifferenz $\overline{\Delta}_{EHKV,k}$ für jeden diskreten Massestromwert $\dot{m}_k$ durch Mittelung aller Betriebspunkt-Temperaturdifferenzen $\Delta_{EHKV}^{k,j}\left(\dot{m}_k, \vartheta_{VL,j}\right)$ für den einen diskreten Massestromwert $\dot{m}_k$ gemäß der Beziehung

$$\overline{\Delta}_{EHKV}^k = \frac{1}{J} \sum_{j=1}^{J} \Delta_{EHKV}^{k,j}\left(\dot{m}_k, \vartheta_{VL,j}\right)$$

ermittelt.

Für jeweils einen der diskreten Massestromwerte $\dot{m}_k$ wird ein Korrekturgrößen-Mittelwert $\left(\overline{k}_{korr}^{k}\right)$ der Zwischen-Korrekturgröße $k_{korr}^{k,j}\left(\dot{m}_k,\vartheta_{VL,j},\Delta_{EHKV}\right)$ über die verschiedenen Vorlauftemperaturwerte $\vartheta_{VL,j}$ gebildet, d.h. mathematischer ausgedrückt wird der Mittelwert der Korrekturgröße $\overline{k}_{korr}^{k}$ für jeden diskreten Massestromwert $\dot{m}_k$ durch Mittelung aller Betriebspunkt-Temperaturdifferenzen $k_{korr}^{k,j}\left(\dot{m}_k,\vartheta_{VL,j},\Delta_{EHKV}\right)$ für den einen diskreten Massestromwert $\dot{m}_k$ gemäß der Beziehung

$$\overline{k}_{korr}^{k} = \frac{1}{J}\sum_{j=1}^{J} k_{korr}^{k,j}\left(\dot{m}_k,\vartheta_{VL,j}\right)$$

ermittelt.

Die so erzeugte Kennfunktion der Korrekturgröße $k_{korr}(\Delta_{EHKV})$ ist dann durch einen Korrekturwertvektor $\left[\overline{\Delta}_{EHKV}^{k},\overline{k}_{korr}^{k}\right]$ definiert, der für jeden der diskreten Massestromwerte $\dot{m}_k$ den Temperaturdifferenz-Mittelwert $\overline{\Delta}_{EHKV}^{k}$ und den Korrekturgrößen-Mittelwert $\overline{k}_{korr}^{k}$ enthält.

In einer bevorzugten Ausführungsform des vorgeschlagenen Verfahrens kann als Korrekturgröße $k_{korr}(\Delta_{EHKV})$ ein Korrekturfaktor $K(\Delta_{EHKV})$ gewählt werden, der in der rechnerischen Verknüpfung $f_1$ mit dem Roh-Verbrauchsinkrement $\Delta Z_{roh}(\Delta_{EHKV})$ multipliziert wird, um das endgültige Verbrauchsinkrement $\Delta Z$ zu bilden.

In einer formelmäßigen Darstellung gilt also die Beziehung

$$\Delta Z = f_1(\Delta Z_{roh}(\Delta_{EHKV}), K(\Delta_{EHKV})) = \Delta Z_{roh}(\Delta_{EHKV}) \cdot K(\Delta_{EHKV}),$$

wobei die Betriebspunkt-Korrekturgröße $K^{k,j}(\dot{m}_k,\vartheta_{VL,j})$ in diesem Fall für jeden Betriebspunkt $[\dot{m}_k,\vartheta_{VL,j}]$ vorzugsweise mittels der Rechenvorschrift

$$K^{k,j}\left(\dot{m}_k,\vartheta_{VL,j}\right) = E_{soll} \cdot \frac{\dot{Q}\cdot\Delta t}{\Delta Z_{roh}(\Delta_{EHKV})}$$

berechnet werden kann, wobei $E_{soll}$ wie bereits beschrieben ein konstanter Empfindlichkeitssollwert $E_{soll}^{konst}$ oder eine Empfindlichkeitssollwertfunktion, bspw. $E_{soll} = f(\Delta_{EHKV})$ oder $f(\dot{m}/\dot{m}_N)$ oder $f(\vartheta_{VL})$, sein kann.

Gemäß einer besonders bevorzugten Ausführungsform kann der Korrekturfaktor $K(\Delta_{EHKV})$ als zusätzlicher Faktor $K_E(\Delta_{EHKV})$ gewählt werden. Das Roh-Verbrauchsinkrement $\Delta Z_{roh}(\Delta_{EHKV})$ des Heizkostenverteilers kann dann vorzugsweise als unkorrigiert berechnetes aktuelles Wärmeinkrement $\Delta Q_{unkorr} = \dot{Q}_{unkorr} \cdot \Delta t$ des Heizkörpers, bspw. gemäß DIN EN 834, gewählt werden als

$$\Delta Z_{roh}(\Delta_{EHKV}) = \Delta Q_{unkorr}(\Delta_{EHKV}) = \dot{Q}_{unkorr}(\Delta_{EHKV}) \cdot \Delta t$$

$$= K_Q \cdot K_C \cdot K_T \cdot (\Delta_{EHKV})^n \cdot \Delta t.$$

Für den Zielverlauf $E_{Ziel}$ der Empfindlichkeit $E$ bei der aktuell berechneten Wärmeleistung gilt dann entsprechend:

$$E_{Ziel} := \frac{\Delta Z}{\dot{Q} \cdot \Delta t} = \frac{\dot{Q}_{unkorr}(\Delta_{EHKV}) \cdot K_E(\Delta_{EHKV})}{\dot{Q}} = \frac{K_Q \cdot K_C \cdot K_T \cdot K_E(\Delta_{EHKV}) \cdot (\Delta_{EHKV})^n}{\dot{Q}}$$

Der Vorteil eines solchen Variante liegt daran, dass die grundsätzliche logarithmische Abhängigkeit von der den gemessenen Temperaturen, bspw. zusammengefasst als $(\Delta_{EHKV})^n$, unverändert bleibt.

Jeder der hier verwendeten Bewertungsfaktoren $K_C, K_T, K_Q$ der DIN EN 834 für Heizkostenverteiler (dort auch als Korrekturfaktoren bezeichnet) kann erfindungsgemäß auch als Korrekturfaktor $K_C(\Delta_{EHKV}), K_T(\Delta_{EHKV}), K_Q(\Delta_{EHKV})$ bei dem beschriebenen Verfahren verwendet werden. Entsprechendes gilt für sämtliche eingangs erwähnten Gerätefaktoren, die mit den Bewertungsfaktoren $K_C, K_T, K_Q$ in einem funktionalen Zusammenhang stehen, wie bspw. die Größe $Q_N$, und multiplikativ auf die Temperaturdifferenz $\Delta_{EHKV}$ oder eine damit in funktionalem Zusammenhang stehende Größen, bspw. die Größe $(\Delta_{EHKV})^n$. D.h. mit anderen Worten, dass die auf die Größe $(\Delta_{EHKV})^n$ oder $\Delta_{EHKV}$ bei der Berechnung der Wärmeleistung des Heizkörpers angewandten Faktoren auch anders, bspw. als $k_{ges}$ wie eingangs beschrieben, zusammengefasst werden können. Als Roh-Verbrauchsinkrement $\Delta Z_{roh}(\Delta_{EHKV})$ würde dann vorzugsweise eine Funktion ohne den jeweiligen Bewertungsfaktor $K_C, K_T, K_Q$ bzw. den jeweiligen davon abgeleiteten Gerätefaktoren gewählt. Konkrete Ausführungsbeispiele hierfür werden noch beschrieben.

In einer anderen erfindungsgemäßen Ausführungsform kann als Korrekturgröße $k_{korr}$ ein Korrekturexponent $n_{korr}(\Delta_{EHKV})$ verwendet werden, der in einem Roh-Verbrauchsinkrement $\Delta Z_{roh}(\Delta_{EHKV})$ entsprechend der Funktionsvorschrift $\Delta Z_{roh}(\Delta_{EHKV}) = VAR_1 \cdot (VAR_2 \cdot \Delta_{EHKV})^n$ den Heizkörperexponent $n$ in der rechnerischen Verknüpfung $f_1$ ersetzt, um das endgültige Verbrauchsinkrement ($\Delta Z$) zu bilden, wobei die Größen $VAR_1, VAR_2$ Variablen sind.

Für die Anwendung der Erfindung kommt es auf die Wahl dieser (nicht von der Temperaturdifferenz $\Delta_{EHKV}$ abhängigen) Variablen $VAR_1$, $VAR_2$ nicht an. Diese können bspw. durch die Bewertungsfaktoren $K_C, K_T, K_Q$ der DIN EN 834 oder davon abgeleitete Größen gebildet werden, die in einem konkreten Ausführungsbeispiel noch beispielhaft erläutert werden. Dies ist sinnvoll, um mit dem Roh-Verbrauchsinkrement $\Delta Z_{roh}$ zumindest eine unkorrigierte Wärmemenge $\Delta Q_{unkorr} = \dot{Q}_{unkorr} \cdot \Delta t$ des Heizkörpers anzuzeigen. Die Erfindung ist allerdings nicht auf eine solche bevorzugte Ausführungsform beschränkt und funktioniert auch, wenn die Variablen $VAR_1$, $VAR_2$ jeweils als Variablen $VAR_1 = VAR_2 = 1$ oder sonstige Werte gewählt werden.

Das endgültige Verbrauchsinkrement $\Delta Z$ ergibt sich also aus der Funktion

$$\Delta Z = f_1(\Delta Z_{roh}(\Delta_{EHKV}), n) = VAR_1 \cdot (VAR_2 \cdot \Delta_{EHKV})^{n_{korr}(\Delta_{EHKV})}.$$

Sowohl die Anwendung eines Korrekturfaktors $K(\Delta_{EHKV})$ als auch die Anwendung eines Korrektur-Exponenten $n_{korr}(\Delta_{EHKV})$ als $k_{korr}(\Delta_{EHKV})$ nach dem vorgeschlagenen Verfahren ermöglicht es, die Empfindlichkeit des Heizkostenverteilers (d.h. allgemeiner einer Vorrichtung zur Erfassung der Wärmeabgabe Heizkörpers) einzustellen und insbesondere deren Zielverlauf festzulegen, bspw. als konstanten Empfindlichkeitssollwert $E_{soll}^{konst}$ oder durch eine Empfindlichkeitssollwertfunktion $E_{soll} = f(x)$ wie bereits ausführlich beschrieben. Dies erlaubt es erfindungsgemäß auch, systematische Abweichungen bei der Heizkostenerfassung zu berücksichtigen, bspw. anderen Wärmeeintrag, etwa durch Wärmeeintrag von den Vor- und Rücklaufleitungen des Wärmeträgermediums und/oder anderen benachbarten Wohnungen. Insgesamt lässt sich so eine deutlich verbesserte absolute Genauigkeit zu erreichen.

Erfindungsgemäß kann die Kennfunktion als Kennfeld oder Wertetabelle ausgebildet sein, bei der einem diskreten Wert für die Temperaturdifferenz $\Delta_{EHKV}$ die für diese Temperaturdifferenz $\Delta_{EHKV}$ anzuwendende Korrekturgröße $k_{korr}(\Delta_{EHKV})$ zugeordnet ist. Die diskreten Werte für die Temperaturdifferenz können bspw. die Stützpunkte bilden, an den die Korrekturgrößen erzeugt wurden. Für Werte der Temperaturdifferenz $\Delta_{EHKV}$ zwischen diskreten Werten für die Temperaturdifferenz $\Delta_{EHKV}$ (bspw. den in der Figurenbeschreibung noch detailliert beschriebenen Werten $\overline{\Delta}_{EHKV}^k$ oder anderen Stützstellen) kann eine Interpolation bzw. eine Extrapolation angewendet werden. Eine Interpolation wird für einen Wert der Temperaturdifferenz $\Delta_{EHKV}$ zwischen zwei diskreten Wert für die Temperaturdifferenz $\Delta_{EHKV}$ (nachfolgend auch kurz Stützstellen) angewendet, d.h. für einen innerhalb des durch die Stützstellen abgedeckten Wertebereich. Entsprechend wird eine Interpolation für einen Wert der Temperaturdifferenz $\Delta_{EHKV}$ angewendet, der außerhalb des durch die Stützstellen abgedeckten Wertebereichs liegt, d.h. nicht zwischen zwei diskreten Werten für die Temperaturdifferenz $\Delta_{EHKV}$.

Aus den Stützpunkten, d.h. aus den diskreten Werten für die Temperaturdifferenz $\Delta_{EHKV}$ und den diesen zugeordneten Korrekturgrößen $k_{korr}(\Delta_{EHKV})$, kann eine vorzugsweise kontinuierliche Funktion abgeleitet werden, die dann einen funktionalen Zusammenhang zwischen der Temperaturdifferenz $\Delta_{EHKV}$ anzuwendende Korrekturgröße

$k_{korr}(\Delta_{EHKV})$ beschreibt, so dass $k_{korr}(\Delta_{EHKV}) = f(\Delta_{EHKV})$ gilt. Die Funktion $f$ bzw. der funktionale Zusammenhang $f$ kann bspw. die eingangs bereits beschrieben Polynomfunktion oder ein beliebiger anderer funktionaler Zusammenhang sein. Das Ableiten der Funktion kann durch einen Fit der Funktionsparameter an die diskreten Werte der Temperaturdifferenz $\Delta_{EHKV}$ mit den zugeordneten Korrekturgrößen $k_{korr}(\Delta_{EHKV})$ erfolgen.

Die Wertetabelle kann bspw. durch den entsprechend dem bereits beschriebenen Vorgehen erzeugten Korrekturwertvektor $\left[\Delta^{k}_{EHKV}, k^{k}_{korr}\right]$ gebildet werden, wobei grundsätzlich jede Art einer tabellarischen Aufstellung in Frage kommt, in der Werte für die Temperaturdifferenz $\Delta_{EHKV}$ und die bei dieser Temperaturdifferenz $\Delta_{EHKV}$ anzuwendende Korrekturgröße $k_{korr}(\Delta_{EHKV})$ gelistet sind. Diese können bspw. auch aus den Einträgen des Korrekturwertvektor $\left[\Delta^{k}_{EHKV}, k^{k}_{korr}\right]$ abgeleitet werden, so dass die Einträge der Wertetabelle (und damit das Kennfeld) zwar durch den Korrekturwertvektor $\left[\Delta^{k}_{EHKV}, k^{k}_{korr}\right]$ definiert sind, im Wert aber von diesem abweichen.

Anstelle eines Korrekturvektors bzw. von Stützstellen mit den Korrekturgrößen ist es auch möglich, bspw. Intervalle der Temperaturdifferenz $[\Delta_{EHKV1} ... \Delta_{EHKV2}]$, $[\Delta_{EHKV2} ... \Delta_{EHKV3}]$, ... vorzugeben, und für jedes Intervall eine Korrekturgröße $k^{intervall}_{korr}(\Delta_{EHKV})$ vorgegeben werden, die sich durch eine geeignet gewählte Approximation aus den Stützstellen, d.h. genauer den an den Stützstellen ermittelten Korrekturgrößen $k^{k}_{korr}$, ergibt.

Bei einer einfachsten Anwendung des erfindungsgemäß vorgeschlagenen Verfahrens kann also in der Wertetabelle der Eintrag mit der Temperaturdifferenz $\Delta_{EHKV}$ ermittelt werden, welche der aktuell durch den Heizkostenverteiler ermittelten Temperaturdifferenz $\Delta_{EHKV,aktuell}$ am nächsten kommt, und der zugehörige diskrete Korrekturwert ausgewählt werden. In einer Weiterentwicklung dieser einfachsten Anwendung des erfindungsgemäß vorgeschlagenen Verfahrens kann ein Zwischenwert für die Korrekturgröße $k_{korr}(\Delta_{EHKV})$ durch eine (bspw. lineare) numerische Interpolation erzeugt werden. Eine ähnliche Ausführungsform sieht vor, dass die Korrekturgröße $k_{korr}(\Delta_{EHKV})$ als bereichsweise Wertetabelle $k_{korr,i}(\Delta_{EHKV,i-1} \leq \Delta_{EHKV} < \Delta_{EHKV,i})$ abgelegt ist. In einer solchen bereichsweisen Wertetabelle sind also die Grenzen für die Temperaturdifferenz $\Delta_{EHKV}$ in (geeignet dimensionierte) Intervalle $i$ der Temperaturdifferenz $\Delta_{EHKV}$ eingeteilt. Hierdurch können bspw. bei einer starken, nicht linearen Änderung der Korrekturgröße $k_{korr}(\Delta_{EHKV})$ in Abhängigkeit von der Temperaturdifferenz $\Delta_{EHKV}$ die Grenzen der Bereiche sinnvoll (d.h. nicht unbedingt gleich groß) vorgegeben werden.

Eine weitere Möglichkeit zur Vorgabe der Korrekturgröße $k_{korr}(\Delta_{EHKV})$ gemäß einer Ausführungsform der vorliegenden Erfindung liegt erfindungsgemäß darin, die gesamte rechnerische Verknüpfung $f_1$ zur Berechnung des korrigierten Verbrauchsinkrements $\Delta Z$ in dem Kennfeld in Anhängigkeit von der Temperaturdifferenz $\Delta_{EHKV}$, d.h. die Funktion $\Delta Z = f_1(\Delta Z_{roh}(\Delta_{EHKV}), k_{korr}(\Delta_{EHKV}))$ ggf. sogar einschließlich der Berechnungsvorschrift für das Roh-Verbrauchsinkrement $\Delta Z_{roh}(\Delta_{EHKV})$ und/oder der Korrekturgröße $k_{korr}(\Delta_{EHKV})$, in dem Kennfeld zu hinterlegen. Dies kann bspw. analytisch entsprechend der vorstehend angegebenen Gleichungen erfolgen.

Gemäß einer etwas abgewandelten Ausführungsform der Erfindung ist es auch denkbar, die Korrekturgröße $k_{korr}(\Delta_{EHKV})$ als kontinuierliche Funktion von der Temperaturdifferenz $\Delta_{EHKV}$ zu beschreiben, bspw. durch eine Anpassung einer geeigneten Fitfunktion an die Werte der Korrekturtabelle. Die Fitfunktion kann bspw. die bereits beschriebene Polynomfunktion sein. Auch eine solche kontinuierliche Funktion beschreibt das erfindungsgemäß vorgeschlagene Kennfeld bzw. die entsprechende Kennfunktion zur Anwendung der Korrekturgröße.

Gemäß einem weiteren Aspekt der vorliegenden Erfindung kann für die als Kennfeld bzw. Kennfunktion abgelegte Korrekturgröße $k_{korr}(\Delta_{EHKV})$ zusätzlich (im Sinne einer weiteren Abhängigkeit) mindestens eine der Größen (Heizmedium-)Vorlauftemperatur $\vartheta_{VL}$, Heizkörpertemperatur $\vartheta_{HS}$ oder (Heizmedium-) Massestrom $\dot{m}$ berücksichtigt werden, wobei die berücksichtigten Vorlauftemperatur $\vartheta_{VL}$, Heizkörpertemperatur $\vartheta_{HS}$ und/oder Massestrom $\dot{m}$ fest vorgegeben oder als Funktion mindestens einer der durch den Heizkostenverteiler erfassten oder gebildeten Größen Heizkörpertemperatur $\vartheta_{HS}$, Raumlufttemperatur $\vartheta_{RS}$ oder Temperaturdifferenz $\Delta_{EHKV}$ parametriert sind. Ggf. kann eine Korrekturgröße jeweils zusätzlich für feste Vorlauftemperaturwerte und/oder feste Massestromwerte bzw. Massestromverhältnisse angewendet werden, bspw. wenn diese Werte in der Anlage konstant sind. Somit ergeben sich die entsprechenden Korrekturgrößen jeweils in Abhängigkeit weiterer, fest gewählter Werte, bspw. als $k_{korr} = f(\Delta_{EHKV}, \vartheta_{VL} = 55°C)$, $k_{korr} = f(\Delta_{EHKV}, \vartheta_{VL} = 70°C)$ oder $k_{korr} = f(\Delta_{EHKV}, \dot{m}/\dot{m}_N = 0,5)$.

Die zusätzliche Berücksichtigung einer vordefinierten oder auf Grundlage der von dem Heizkostenverteiler erfassten Größen parametrierten Größe Vorlauftemperatur $\vartheta_{VL}$, Heizkörpertemperatur $\vartheta_{HS}$ und/oder Massestrom $\dot{m}$ kann als zusätzliche Feinkorrektur angebracht werden, indem hierdurch der aktuelle Betriebszustand des Heizkörpers aufgrund von durch den Heizkostenverteiler erkennbaren oder durch die Installation vorgegebenen Umständen genauer vorhersagbar ist. Diese Größen sind gemäß einer bevorzugten Ausführung der Erfindung also keine Messgrößen, sondern feste Parameter.

Dies kann bspw. der Fall sein, wenn die Heizungsanlage mit einem vorgegebenen Massestrom $\dot{m}$ oder einer vorgegebenen Vorlauftemperatur $\vartheta_{VL}$ oder innerhalb bestimmter Bereiche von Massestrom $\dot{m}$ und/oder Vorlauftemperatur $\vartheta_{VL}$ betrieben wird. In diesem Fall kann die über mögliche Betriebspunkte des Heizkörpers gemittelte Korrekturgröße $k_{korr}$ (bspw. durch Ergänzung einer weiteren zusätzlichen Korrektur) durch Berücksichtigung von in der Praxis relevanten Betriebspunkten, die ggf. auch in Abhängigkeit der erfassten Temperaturdifferenz parametrierbar sind, verbessert werden, bspw. um eine in Figur 4 dargestellte, auch nach der Korrektur verbliebene Abhängigkeit von der Vorlauftemperatur und/oder dem Massestrom zu beseitigen.

In diesem Sinne kann die als Kennfeld abgelegte Korrekturgröße zusätzlich die Vorlauftemperatur $\vartheta_{VL}$ und/oder den Massestrom $\dot{m}$ enthalten, entweder als fest eingespeicherte Größe oder als in Abhängigkeit von der Temperaturdifferenz $\Delta_{EHKV}$ bereichsweise definierte Größe.

Die Erfindung betrifft auch eine Vorrichtung zur Erfassung der Wärmeabgabe Q eines Heizkörpers mit einem Heizkörpersensor zur Erfassung einer Heizkörpertemperatur $\vartheta_{HS}$, einem Raumluftsensor zur Erfassung einer Raumlufttemperatur $\vartheta_{RS}$ und einer Recheneinheit. Die Recheneinheit ist mittels Programmen zur Datenverarbeitung dazu eingerichtet ist, unter Verwendung der erfassten Heizkörpertemperatur $\vartheta_{HS}$, der erfassten Raumlufttemperatur $\vartheta_{RS}$ und eines oder mehrerer der insbesondere für den Typ der Vorrichtung und/oder den Typ des Heizkörpers bekannten Parameter Heizkörperreferenzleistung $\dot{Q}_N$, Korrekturfaktor $K_C$, Korrekturfaktor $K_T$, Heizkörperexponent $n$ oder daraus abgeleiteten Parameters, wobei die verwendeten Parameter für die Vorrichtung und den Heizkörper bekannt sind und beispielsweise in der Recheneinheit bei der Installation der Vorrichtung an dem Heizkörper parametrierbar sind, die Wärmeabgabe $Q$ des Heizkörpers zu ermitteln und ggf. anzuzeigen. Ergänzend ist die Recheneinheit durch Programme zur Datenverarbeitung weiter dazu eingerichtet ist, das vorbeschriebene Verfahren oder Teile hiervon durchzuführen.

Weitere Vorteile, Merkmale oder Anwendungsmöglichkeiten ergeben sich auch aus der nachfolgenden Beschreibung von Anwendungsbeispielen und der Zeichnung. Dabei bilden alle beschriebenen und/oder zeitlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1    schematisch eine an einem Heizkörper montierte Vorrichtung zur Erfassung der Wärmeabgabe Q eines Heizkörpers gemäß einer Ausführungsform der vorliegenden Erfindung;

Fig. 2    schematisch ein Verlaufsdiagramm zur Durchführung des erfindungsgemäß vorgeschlagenen Verfahrens zur Erfassung der Wärmeabgabe Q gemäß einer Ausführungsform der vorliegenden Erfindung;

Fig. 3    eine graphische Darstellung der Empfindlichkeit E eines 2-Fühler-Heizkostenverteilers ohne Anwendung des erfindungsgemäß vorgeschlagenen Verfahrens;

Fig. 4    eine graphische Darstellung der Empfindlichkeit E eines 2-Fühler-Heizkostenverteilers nach Anwendung des erfindungsgemäß vorgeschlagenen Verfahrens;

Fig. 5    den Verlauf des Korrekturfaktors $K_E(\vartheta_{VL},\dot{m})$ über dem relativen Massestrom $\dot{m}/\dot{m}_n$ für verschiedene Vorlauftemperaturen $\vartheta_{VL}$;

Fig. 6    den Verlauf des Korrekturfaktors $K_E(\vartheta_{VL},\Delta_{EHKV})$ über der Temperaturdifferenz $\Delta_{EHKV}$ für verschiedene Vorlauftemperaturen $\vartheta_{VL}$; und

Fig. 7    den Verlauf des Korrekturfaktors $K_E(\vartheta_{VL},\Delta_{EHKV})$ nach Mittelung über die verschiedenen Vorlauftemperaturen.

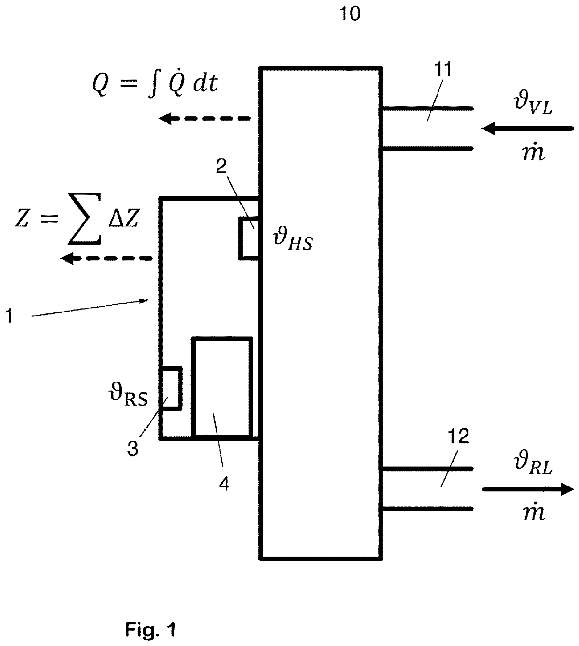

In Fig. 1 ist schematisch eine Vorrichtung 1 zur Erfassung der Wärmeabgabe Q eines Heizkörpers 10 dargestellt, der durch ein Heizmedium mit einem Massestrom $\dot{m}$ und der Vorlauftemperatur $\vartheta_{VL}$ mit Wärmeenergie über einen Vorlauf 11 versorgt wird. Das Heizmedium erwärmt den Heizkörper 1 auf eine Heizkörpertemperatur $\vartheta_{HS}$ und gibt Wärme an die Umgebung mit Lufttemperatur ab. Dabei kühlt sich das Heizmedium ab und strömt durch den Rücklauf 12 mit der Rücklauftemperatur $\vartheta_{RL}$ und demselben Massestrom $\dot{m}$ wieder aus dem Heizkörper 10 heraus.

Die in einem Betrachtungs- bzw. Abrechnungszeitraum T durch den Heizkörper 10 abgegebene Wärmemenge Q soll in üblicher Weise erfasst werden, um in Gebäuden eine Heizkostenverteilung vornehmen zu können. Dies ist insbesondere für Mehrfamilienhäuser vorgeschrieben, in denen die Heizkosten je nach Verbrauch auf die verschiedenen Nutzer verteilt werden sollen. Üblich ist es, hierfür die über einen betrachteten Zeitraum T integrierte Wärmeabgabe Q

$= \int \dot{Q} \, dt$ zu erfassen.

Dazu wird an dem bzw. jedem Heizkörper 10 eine Vorrichtung 1 zur Erfassung der Wärmeabgabe $Q$ montiert, die nachfolgend der Einfachheit halber als Heizkostenverteiler bezeichnet wird.

Häufig werden als Heizkostenverteiler 1 sogenannte 2-Fühler-Geräte bzw. 2-Fühler-Heizkostenverteiler eingesetzt, die als Kompaktgerät direkt an dem Heizkörper montiert sind, wie in Fig. 1 dargestellt. Die Erfindung ist jedoch nicht auf diese Art der Montage und des Aufbaus des Heizkostenverteilers 1 beschränkt, sondern kann grundsätzlich auf alle Heizkostenverteiler 1 angewendet werden, die einen Heizkörpersensor 2 zur Messung der Heizkörpertemperatur $\vartheta_{HS}$ an dem Montageort auf der Heizkörperoberfläche und eine Raumluftsensor 3 zur Messung der Raumlufttemperatur $\vartheta_{RS}$ am Ort des Raumluftsensors 3 aufweisen. Aus die durch Messung erfassten Heizkörpertemperatur $\vartheta_{HS}$ und Raumlufttemperatur $\vartheta_{RS}$ berechnet eine Recheneinheit 4 des Heizkostenverteilers 1 die Temperaturdifferenz $\Delta_{EHKV}$, die meist als (ggf. bewertete) Differenz $\Delta_{EHKV} = \vartheta_{HS} - \vartheta_{RS}$ der Heizkörpertemperatur $\vartheta_{HS}$ und Raumlufttemperatur $\vartheta_{RS}$ definiert ist.

Die (momentane bzw. aktuelle) Wärmeleistung $\dot{Q}$ bzw. die im geräteseitigen Diskretisierungszeitraum (Zeitintervall) $\Delta t$ abgegebene Wärmemenge $\Delta Q$ des Heizkörpers kann dann als (momentanes bzw. aktuelles) Verbrauchsinkrement

$$\Delta Z = \Delta Q = \dot{Q} \cdot \Delta t = \left( K_Q \cdot K_C \cdot K_T \cdot \Delta_{EHKV}{}^n \right) \cdot \Delta t$$

beschrieben werden, wobei $K_Q, K_C, K_T$ die bereits erläuterten, insbesondere von dem Heizkörpertyp und dem Heizkostenverteilertyp abhängigen Bewertungsfaktoren sind und $n$ ein Heizkörperexponent ist, der entweder dem heizkörperspezifischen Wert entspricht oder üblicherweise als fester Wert in der Größenordnung $n = 1{,}1$ *bis* $1{,}3$ gewählt wird.

Die abgegebene Wärmemenge $Q$ ergibt sich dann durch Summe der Verbrauchsinkremente $\Delta Z$ über den betrachteten Zeitraum, die die Verbrauchsanzeige $Z$ bildet.

Allerdings ist die Empfindlichkeit $E$ des Heizkostenverteilers 1 nicht für alle Betriebspunkte des Heizkörpers 10 gleich. Die Empfindlichkeit $E$ des Heizkostenverteilers 1 ist bspw. definiert als das Verhältnis der durch den Heizkostenverteiler berechneten Wärmeabgabe (entsprechend der Verbrauchsanzeige $Z$) zu einer tatsächlich exakt bestimmten (realen) Wärmeabgabe des Heizkörpers 10 (entsprechend der Wärmeabgabe $Q$), wobei der reale Wärmeabgabe $Q$ durch den nur mit einem Heizkörpersensor 2 und einem Raumluftsensor 3 ausgestatteten Heizkostenverteiler 1 (2-Fühler-Heizkostenverteiler) nicht exakt bestimmt werden kann.

Fig. 3 zeigt die Empfindlichkeit $E$ als Funktion des Massestroms $\dot{m}$ (normiert auf einen Normmassestrom $\dot{m}_N$ als normierten oder relativen Massestrom $\dot{m}/\dot{m}_N$) in Abhängigkeit von verschiedenen Vorlauftemperaturen $\vartheta_{VL}$ des Heizmediums im Vorlauf 11 des Heizkörpers 10 für einen Heizkostenverteiler 1 ohne Anwendung des erfindungsgemäß vorgeschlagenen Verfahrens. Es ist zu erkennen, dass die Empfindlichkeit $E$ des 2-Fühler-Heizkostenverteilers 1 mit kleinem Massestrom signifikant ansteigt. Mit anderen Worten ist der Anzeigefortschritt der Verbrauchsanzeige $Z$ mit kleinem Massestrom $\dot{m}$ also größer als die tatsächliche Wärmeabgabe $Q$. Außerdem ist Empfindlichkeit $E$ bei niedrigen Vorlauftemperaturen $\vartheta_{VL}$ größer als bei hohen Vorlauftemperaturen $\vartheta_{VL}$. Je nach Betriebspunkt [$\dot{m}, \vartheta_{VL}$] des Heizkörpers 10 kann die Verbrauchsanzeige daher größere Werte anzeigen als es dem tatsächlichen Verbrauch entspricht.

Solange alle Heizkörper in einem Heizkreis oder einer Liegenschaft in demselben oder einen ähnlichen Betriebspunkt betrieben werden, wirkt sich dies nicht auf die Umlage der Heizkosten auf die verschiedenen Nutzer aus, weil diese sich relativ nicht verändert. Dies dürfte in einer Vielzahl der Fälle bei der Heizkostenverteilung der Fall sein. Allerdings ist es grundsätzlich wünschenswert, die Verbrauchsanzeige $Z$ von 2-Fühler-Heizkostenverteilern, mit denen der Betriebspunkt des Heizkörpers nicht exakt bestimmt werden kann, an die tatsächliche Wärmeabgabe $Q$ anzugleichen. Dies ist zum Beispiel vorteilhaft, wenn Anheizprozesse und stationäre Teillastzustände zeitlich parallel auftreten.

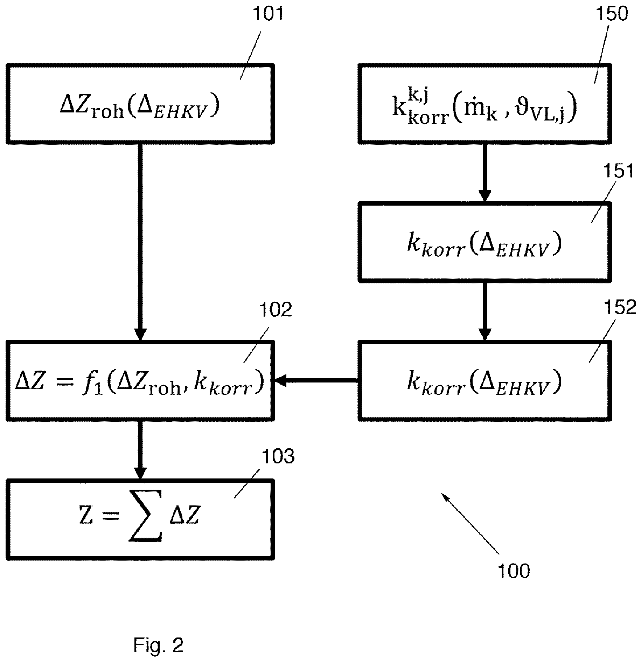

Eine solche Angleichung der Verbrauchsanzeige $Z$ an die tatsächliche Wärmeabgabe $Q$ kann mit dem nachfolgend in Bezug auf Fig. 2 beschriebenen Verfahrens 100 erfolgen, das eine bevorzugte Ausführungsform der Erfindung beschreibt.

Bei einer üblichen Anordnung eines 2-Fühler-Heizkostenverteilers 1 an einem Heizkörper 10 in einer der DIN EN 834 entsprechenden Weise wird in einem ersten Verfahrensschritt 101 ein Roh-Verbrauchsinkrements $\Delta Z_{roh}(\vartheta_{HS}, \vartheta_{RS})$ gebildet, das in einem funktionalen, typischer Weise monoton steigenden Zusammenhang zur Differenz der Sensortemperaturen $\Delta_{EHKV} = (\vartheta_{HS} - \vartheta_{RS})$, d.h. der Temperaturdifferenz $\Delta_{EHKV}$ steht. Dieses Roh-Verbrauchsinkrement $\Delta Z_{roh}$ wird anschließend mittels einer Korrekturgröße $k_{korr}(\Delta_{EHKV})$ korrigiert, die auch von der Temperaturdurdifferenz $\Delta_{EHKV}$ abhängt.

Dazu werden in einem Verfahrensschritt 150 messtechnisch in einem Messstand oder/und rechnerisch in einer Simulation Betriebspunkt-Korrekturgrößen $k_{korr}^{k,j}\left(\dot{m}_k, \vartheta_{VL,j}\right)$ für Betriebspunkte [$\dot{m}_k, \vartheta_{VL,j}$] des Heizkörpers 10 dadurch ermittelt, dass aus einem durch eine rechnerische Verknüpfung $f_1$ der für den Betriebspunkt [$\dot{m}_k, \vartheta_{VL,j}$] durch

den Heizkostenverteiler erfassen Temperaturdifferenz $\Delta_{EHKV}$ bzw. des für diese Temperaturdifferenz in dem Heizkostenverteiler 1 berechneten Roh-Verbrauchsinkrement $\Delta Z_{roh}$ und der Betriebspunkt-Korrekturgröße

$k_{korr}^{k,j}\left(\dot{m}_k\,,\vartheta_{VL,j}\right)$ ein Verbrauchsinkrement $\Delta Z$ ermittelt wird, für das der Zielverlauf $E_{Ziel}$ Empfindlichkeit $E$ gilt, d.h. die Bedingung

$$\frac{f_1\left(\Delta Z_{roh}(\Delta_{EHKV}), k_{korr}^{k,j}\left(\dot{m}_k\,,\vartheta_{VL,j}\right)\right)}{\dot{Q}\left(\dot{m}_k\,,\vartheta_{VL,j}\right)\cdot\Delta t} = E_{Ziel} = E_{soll}\left(\dot{m}_k\,,\vartheta_{VL,j}\right)$$

Die tatsächliche Wärmleistung $\dot{Q}$ für den Heizkörper 10 für den Betriebspunkt $[\dot{m}_k, \vartheta_{VL,j}]$, geschrieben in der Kurzform als $\dot{Q}(\dot{m}_k, \vartheta_{VL,j})$, wird dafür in dem Messstand gemessen und/oder in einer Simulation bestimmt. In dem in Figur 3 dargestellten, einfachen Fall wird ein konstanter Empfindlichkeitssollwert $E_{soll}^{konst} = 1$ angenommen.

Für diesen Betriebspunkt $[\dot{m}_k, \vartheta_{VL,j}]$ des Heizkörpers 10 liegt damit also eine Korrekturgröße vor, die die Empfindlichkeit auf einen Sollwert $E_{soll}$ korrigiert, bspw. auf den in Figur 3 dargestellten Wert $E_{soll} = 1 \pm \delta E$ oder einen anderen Zielverlauf der Empfindlichkeit $E$. Mit anderen Worten würde durch Anwendung der Betriebspunkt-Korrekturgröße $k_{korr}^{k,j}\left(\dot{m}_k\,,\vartheta_{VL,j}\right)$ ein gewünschter Verlauf der Empfindlichkeit des 2-Fühlergerätes erreicht werden, wenn diese für jeden Betriebspunkt des Heizkörpers erreicht werden könnte.

In dem Verfahrensschritt 150 werden die Betriebspunkt-Korrekturgrößen $k_{korr}^{k,j}\left(\dot{m}_k\,,\vartheta_{VL,j}\right)$ für eine Vielzahl von Betriebspunkten $[\dot{m}_k, \vartheta_{VL,j}]$ des Heizkörpers 10 gebildet, beispielsweise für alle Betriebspunkte

$$\vartheta_{VL,j} = 30, 40, 55, 70, 90\ °\text{C}$$

und

$$\dot{m}_k = \dot{m}_N \cdot (0{,}05 \cdots 1{,}00).$$

Die Auswahl der Betriebspunkte $[\dot{m}_k, \vartheta_{VL,j}]$ kann erfindungsgemäß jedoch auch abweichend hiervon in geeigneter Weise durch den Fachmann festgelegt werden. Diese Festlegung hat insbesondere auf die erreichte Genauigkeit des Zielverlaufs $E_{Ziel}$.

In einem hierauf folgenden Verfahrensschritt 151 wird aus den Betriebspunkt-Korrekturgrößen $k_{korr}^{k,j}\left(\dot{m}_k\,,\vartheta_{VL,j}\right)$ die Abhängigkeit von dem Massestrom $\dot{m}_k$ und der Vorlauftemperatur $\vartheta_{VL,j}$ ausgemittelt. Dies führt zu einer Abbildung der Betriebspunkt-Korrekturgrößen $k_{korr}^{k,j}\left(\dot{m}_k\,,\vartheta_{VL,j}\right)$ auf eine Korrekturgröße $k_{korr}(\Delta_{EHKV})$, die nur von der Temperaturdifferenz $\Delta_{EHKV}$ abhängt. Hierdurch wird ein Korrekturvektor $k_{korr}(\Delta_{EHKV})$ gebildet, der bspw. als Kennfeld in der Form $\left[\overline{\Delta}_{EHKV}^k, \overline{k}_{korr}^k\right]$ in den Recheneinheiten 4 der Heizkostenverteiler 1 hinterlegt werden kann. Hierbei sind $\overline{\Delta}_{EHKV}^k$ der Wert für eine Temperaturdifferenz $\Delta_{EHKV}$ und $\overline{k}_{korr}^k$ der Wert der Korrekturgröße $k_{korr}$, die für diese Temperaturdifferenz $\Delta_{EHKV}$ angewendet wird.

Der Korrekturvektor $k_{korr}(\Delta_{EHKV})$ kann hierbei für den konkreten Heizkörpertyp individuell bestimmt worden sein, oder als gewichteter Mittelwert für eine Gruppe thermisch ähnlicher Heizkörper bestimmt worden sein oder pauschal als gewichteter Mittelwert für alle auszustattenden Heizkörper bestimmt worden sein.

In dem Verfahrensschritt 152 erfolgt dann die Speicherung des Korrekturvektors $k_{korr}(\Delta_{EHKV})$ in der Recheneinheit 4 der 2-Fühler-Heizkostenverteiler 1, so dass die Korrekturgröße $k_{korr}$ für eine im Betrieb des Heizkostenverteilers 1 in Schritt 101 ermittelte Temperaturdifferenz $\Delta_{EHKV}$ abrufbar ist.

Dieser Abruf erfolgt dann im normalen Betrieb des Heizkostenverteilers 1 an dem Heizkörper 10 im Verfahrensschritt 102, in dem aus Roh-Verbrauchsinkrement $\Delta Z_{roh}(\Delta_{EHKV})$ mittels der Korrekturgröße $k_{korr}(\Delta_{EHKV})$ durch eine rechnerische Verknüpfung ($f_1$) ein korrigiertes Verbrauchsinkrement $\Delta Z = f_1(\Delta Z_{roh}(\Delta_{EHKV}),k_{korr}(\Delta_{EHKV}))$ ermittelt wird.

Dabei gilt $\dfrac{\Delta Z}{\dot{Q}\cdot\Delta t} = E_{Ziel} \cong E_{soll}$ im 2-Fühler-Heizkostenverteiler 1. Mit anderen Worten stellt die Größe $E_{soll} \pm \delta E$, die den erreichten Korridor der Empfindlichkeit $E$ beschreibt, so etwas wie die durch die Anwendung des Korrekturfaktors $k_{korr}$ erreichbare bzw. erreichte Genauigkeit bzw. Empfindlichkeit dar.

In dem abschließenden Verfahrensschritt 103 erfolgt dann die Summation (bzw. Integration) der Verbrauchsinkremente $\Delta Z$ zur Verbrauchsanzeige $Z = \sum\Delta Z$. Dies kann jeweils dadurch erfolgen, dass - nach Korrektur des Roh-Verbrauchsinkrements $\Delta Z_{roh}$ in das korrigierte Verbrauchsinkrement $\Delta Z$ - das korrigierte Verbrauchsinkrement $\Delta Z$ zu der bisherigen Verbrauchsanzeige hinzuaddiert wird. Es ist erfindungsgemäß auch möglich, in der Recheneinheit eine korrigierte Verbrauchsanzeige $Z$ und eine nicht korrigierte Verbrauchsanzeige $Z_{roh}$ parallel zu führen. Damit stehen für eine spätere Auswertung bei Werte zur Verfügung.

Nachfolgend werden noch zwei erfindungsgemäß bevorzugte Möglichkeiten zur Ermittlung der Korrekturgröße $k_{korr}$ beschrieben.

Gemäß einer ersten Ausführungsform zur Bestimmung der Korrekturgröße $k_{korr}$ wird die Korrekturgröße als zusätzlicher Faktor $K_E(\Delta_{EHKV})$ bestimmt.

Die Berechnung einer idealen, von Vorlauftemperatur $\vartheta_{VL}$ und Heizmediumstrom $\dot{m}$ abhängigen Korrekturgröße und ihre rechnerische Abbildung auf eine Korrekturgröße, die von der Sensortemperaturdifferenz $\Delta_{EHKV}$ abhängt, ist zwar im Detail abhängig vom konkreten Bildungsgesetz für das Roh- Verbrauchsinkrement $\Delta Z_{roh}(\vartheta_{HS}, \vartheta_{RS})$, die (geräte- und herstellerspezifische) Systematik für die Bewertungsgrößen $K_Q \cdot K_C \cdot K_T$ bzw. $\dot{Q}_N, k_{sys}, k_{ges}$ sowie die gewählte rechnerische Verknüpfung von Korrekturgröße mit Roh-Verbrauchsinkrement.

Jedoch sind bestimmte Schritte davon unabhängig gleich. Nachfolgend soll für einen grundlegenden 2-Fühler-Heizkostenverteiler 1 eine bevorzugte Methodik erläutert werden.

Für einen 2-Fühler-Heizkostenverteiler mit einem Roh-Verbrauchsinkrement $\Delta Z_{roh}$ nach der Gleichung

$$\Delta Z_{roh} = \Delta t \cdot K_Q \cdot K_C \cdot K_T \cdot (\Delta_{EHKV})^n$$

und einer rechnerischen Verknüpfung der Korrekturgröße in Form eines zusätzlichen Korrekturfaktors $K_E$

$$\Delta Z = \Delta Z_{roh} \cdot K_E$$

folgt für die Empfindlichkeit

$$E = \frac{K_E \cdot K_Q \cdot K_C \cdot K_T \cdot (\Delta_{EHKV})^n}{\dot{Q}} = E_{soll}$$

Nach einfacher Umstellung folgt also für den Korrekturfaktor $K_E$:

$$K_E = E_{soll} \cdot \frac{\dot{Q}}{K_Q \cdot K_C \cdot K_T \cdot (\Delta_{EHKV})^n}$$

Nun misst man bspw. auf einem Prüf- oder Messstandstand für den bzw. die gewünschten Heizkörpertypen mit montiertem 2-Fühler-Heizkostenverteiler 1 (ggf. auch nur einmal für einen Heizkostenverteilertyp) die tatsächliche Heizkörperleistung $\dot{Q}(\vartheta_{VL}, \dot{m})$ mittels Wärmebilanz im Heizmediumstrom durch Messung von $\vartheta_{VL}, \vartheta_{RL}, \dot{m}$ für verschiedene Betriebspunkte $[\dot{m}_k, \vartheta_{VL,j}]$ des Heizkörpers 10, z.B. für $\vartheta_{VL}$ = 30°C ... (10°C) ... 90°C und $\dot{m}$ = 0,1 $\dot{m}_n$ ... (0,1 $\dot{m}_n$) ... 1,0 $\dot{m}_n$. Ergänzend nimmt man in jedem Betriebspunkt $[\dot{m}_k, \vartheta_{VL,j}]$ die durch den Heizkostenverteiler 1 erfassten Heizkörpertemperatur ($\vartheta_{HS}$) und Raumlufttemperatur ($\vartheta_{RS}$) bzw. die daraus gebildete Temperaturdifferenz $\Delta_{EHKV}$ auf. Daraus lässt sich dann für jeden Betriebspunkt die Betriebspunkt-Korrekturgröße $k_{korr}^{k,j}\left(\dot{m}_k, \vartheta_{VL,j}\right)$ ermitteln.

Bei $J'$ Vorlauftemperaturwerten $\vartheta_{VL,j}$ und $I'$ Heizmedium-Massestromwerten $\dot{m}_k$ liegen nun $J' \cdot I'$ Betriebspunkte $[\dot{m}_k, \vartheta_{VL,j}]$ vor, an denen jeweils die Heizkörperleistung, Vorlauftemperatur, Rücklauftemperatur, Heizmedium-Massestrom, Heizkörpertemperatur, Raumlufttemperatur und Temperaturdifferenz, also die Größen $\dot{Q}, \vartheta_{VL}, \vartheta_{RL}, \dot{m}, \vartheta_{HS}, \vartheta_{RS}, \Delta_{EHKV}$, bekannt sind.

Für jeden Betriebspunkt $[\dot{m}_k, \vartheta_{VL,j}]$ kann nun der zunächst vorlauftemperaturabhängige Korrekturfaktor $K_E(\vartheta_{VL}, \Delta_{EHKV})$ gebildet werden:

$$K_E(\vartheta_{VL}, \dot{m}) = K_E(\vartheta_{VL}, \Delta_{EHKV}) = E_{soll} \cdot \frac{1}{K_Q \cdot K_C \cdot K_T} \cdot \frac{\dot{Q}(\vartheta_{VL}, \Delta_{EHKV})}{(\Delta_{EHKV})^n},$$

wobei $E_{soll}$ konstant oder eine Funktion sein kann, bspw. $f(\vartheta_{VL,j}, \dot{m}_k)$.

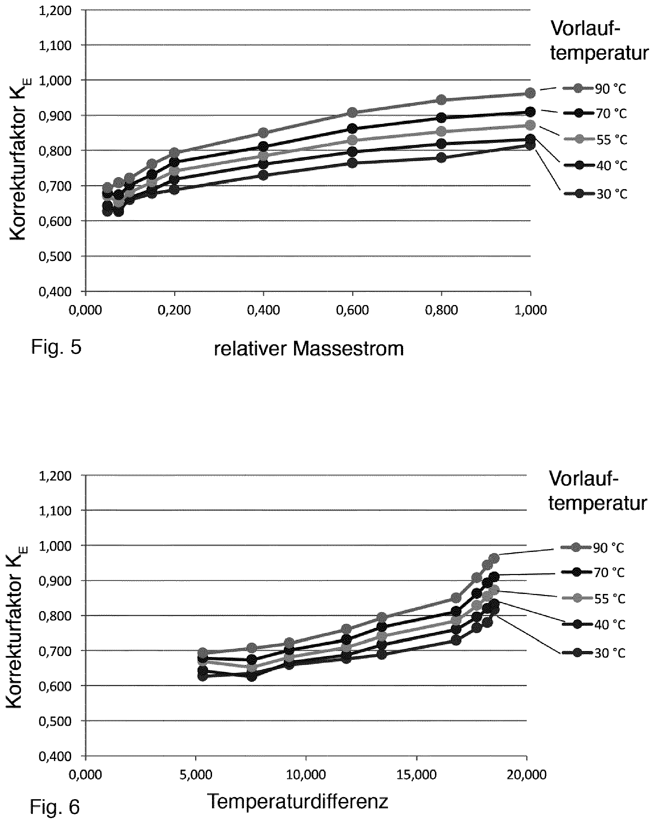

Fig. 5 zeigt den Verlauf des Korrekturfaktors $K_E(\vartheta_{VL}, \dot{m})$ über dem relativen Massestrom $\dot{m}/\dot{m}_n$ für verschiedene Vorlauftemperaturen $\vartheta_{VL}$ als Kennfeld mit einzelnen Stützpunkten und einer linearen Interpolation zwischen den einzelnen Stützpunkten.

In ähnlicher Darstellung zeigt Fig. 6 den Verlauf des Korrekturfaktors $K_E(\vartheta_{VL}, \Delta_{EHKV})$ über der Temperaturdifferenz $\Delta_{EHKV}$ für verschiedene Vorlauftemperaturen $\vartheta_{VL}$ als Kennfeld mit einzelnen Stützpunkten und einer linearen Interpolation zwischen den einzelnen Stützpunkten.

Jede der Fig. 5 und 6 zeigt eine charakteristische Spreizung über die Vorlauftemperatur, d.h. die Korrekturwerte zeigen noch eine Abhängigkeit von der Vorlauftemperatur $\vartheta_{VL}$.

Bevorzugt der zunächst vorlauftemperaturabhängige Korrekturfaktor $K_E(\vartheta_{VL}, \Delta_{EHKV})$ kann weiter vereinfacht werden, weil bei einer bestimmten Vorlauftemperatur $\vartheta_{VL}$ jedem Heizmediumstromwert $\dot{m}$ ein $\Delta_{EHKV}$ bspw. eineindeutig und mit monoton steigendem oder anderweitigem Verlauf von $\Delta_{EHKV}$ zu $\dot{m}$ zugeordnet ist.

Hierzu wird für jeden einzelnen (k-ten der $I'$) Massestromwerte $\dot{m}_k$

$$\dot{m}_k = \{0,1\ \dot{m}_n \ldots (0,1\ \dot{m}_n) \ldots 1,0\ \dot{m}_n\}$$

die Schar der p Betriebspunkte $[\dot{m}_k, \vartheta_{VL,j}]$ ausgewertet und jeweils der Mittelwert der Temperaturdifferenzen $\Delta_{EHKV}$ und der Korrekturfaktoren $K_E$ gebildet:

$$\overline{\Delta}_{EHKV}^k = \frac{1}{J} \cdot \sum_{j=1}^{J} \Delta_{EHKV}\left(\vartheta_{VL,j}, \dot{m}_k\right)$$

und

$$\overline{K}_{E,korr}^k = \frac{1}{J} \cdot \sum_{j=1}^{J} K_E\left(\vartheta_{VL,j}, \dot{m}_k\right)$$

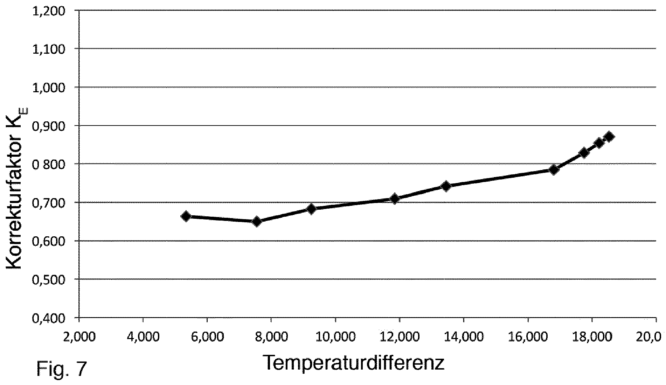

Der die Zielempfindlichkeit mit definierter Unsicherheit einstellende, abschnittsweise Korrekturvektor lautet dann $\overline{K}_{E,korr}^k\left(\overline{\Delta}_{EHKV}^k\right)$ und ist in Fig. 7 wiedergegeben, und zwar mit einer Mittelung der Korrekturfaktoren $K_E(\vartheta_{VL,j}, \dot{m}_k)$ über Vorlauftemperaturen zwischen Vorlauftemperaturen $\vartheta_{VL,j}$ zwischen 40°C und 70°C. Die Anwendung eines solchen Korrekturvektors $\overline{K}_{E,korr}^k\left(\overline{\Delta}_{EHKV}^k\right)$ führt dann zu der in Fig. 4 dargestellten Empfindlichkeit des Heizkostenverteilers.

Anstelle einer Messung auf dem Prüf- oder Messstand kann die beschriebene Ermittlung auch durch eine vollständige numerische Simulationsrechnung mittels FEM-Modellierung von Prüfstand, Heizkörper und 2-Fühler-Heizkostenverteiler erfolgen. Ebenfalls möglich ist eine teilweise numerische Simulation, z.B. mit numerischer Simulation für die Ermittlung des Temperaturverlaufs $\vartheta_x(\vartheta_{VL}, \dot{m})$ auf dem Heizkörper, und Verwendung eines Ansatzes für den

Zusammenhang von $\Delta_{EHKV}$ und $\vartheta_{VL}, \dot{m}$, z.B. einen linearen Zusammenhang:

$$\Delta_{EHKV}(\vartheta_{VL}, \dot{m}) = konst \cdot (\vartheta_x(\vartheta_{VL}, \dot{m}) - \vartheta_{Raum})$$

Ebenfalls möglich ist die rechnerische Ermittlung des Temperaturverlaufs $\vartheta_x(\vartheta_{VL}, \dot{m})$ auf dem Heizkörper durch einen analytischen Ansatz, wie bspw. der bekannte Verlauf für das durchströmte prismatische wärmeabgebende Rohr mit konstantem Wärmeübergang:

$$\vartheta_x(\vartheta_{VL}, \dot{m}) - \vartheta_{Raum} = \vartheta_{VL} \cdot e^{-k \cdot \frac{x}{\dot{m}}}$$

Hierbei kann der Faktor $-k$ bei einer Messung an einem Punkt, z.B. aus den Werten der C-Wert-Messung nach DIN EN 834, bestimmt werden.

Das Eliminieren der Abhängigkeit des Korrekturfaktors $K_E(\vartheta_{VL}, \Delta_{EHKV})$ von der Vorlauftemperatur führt dazu, dass Abweichungen der resultierenden Empfindlichkeit $E$ von der Soll-Empfindlichkeit $E_{soll}$ zugelassen werden, d.h. die Zielempfindlichkeit $E_{Ziel}$ um die Soll-Empfindlichkeit $E_{soll} = 1$ schwankt. Der Vorteil ist, dass es so möglich ist, einen an die tatsächliche Wärmeabgabe $Q$ zu erreichen, ohne auf weitere Messwerte angewiesen zu sein.

Die sich aus der Anwendung des beschriebenen, erfindungsgemäßen Verfahrens ergebende Empfindlichkeit des 2-Fühler-Heizkostenverteilers mit dem korrigierten Anzeigefortschritt $Z$ ist in Fig. 4 dargestellt.

Die resultierende Empfindlichkeit $E$ wird durch das vorgeschlagene Verfahren weitestgehend dahingehend korrigiert, dass die Massestromabhängigkeit eliminiert wird. Eine gewisse Abhängigkeit von der Vorlauftemperatur bleibt bestehen. Dies liegt daran, dass die Korrekturgröße $k_{korr}(\Delta_{EHKV})$ über die verschiedenen Vorlauftemperaturen bei gleichem Massestrom gemittelt wurden.

Gemäß einer zweiten Ausführungsform zur Bestimmung der Korrekturgröße $k_{korr}$ wird die Korrekturgröße als Korrekturexponent $n_{korr}(\Delta_{EHKV})$ für den Heizkörperexponenten $n$ bestimmt.

Für einen 2-Fühler-Heizkostenverteiler mit einem Roh-Verbrauchsinkrement $\Delta Z_{roh}$ nach der Gleichung

$$\Delta Z_{roh} = \Delta t \cdot K_Q \cdot K_C \cdot K_T \cdot (\Delta_{EHKV})^n$$

und einer rechnerischen Verknüpfung der Korrekturgröße in Form eines Korrekturexponenten $n_{korr}$

$$\Delta Z = \Delta t \cdot K_Q \cdot K_C \cdot K_T \cdot (\Delta_{EHKV})^{n_{korr}}$$

folgt nach einer Logarithmisierung für eine Empfindlichkeit $E_{soll}$ für den Korrekturexponenten $n_{korr}$

$$n_{korr} = \frac{LOG\left(\frac{E_{soll} \cdot \dot{Q}}{K_Q \cdot K_C \cdot K_T}\right)}{LOG(\Delta_{EHKV})}.$$

In einer dem zusätzlichen Korrekturfaktor $K_E$ entsprechenden Vorgehensweise können die Temperaturdifferenz und der Korrekturexponent mittels der in einer Messung auf dem Prüf- oder Messstand und/oder durch eine Simulation erhaltenen Abhängigkeiten von der Vorlauftemperatur und dem Massestrom ausgemittelt werden:

$$\overline{\Delta}_{EHKV}^k = \frac{1}{J} \cdot \sum_{j=1}^{J} \Delta_{EHKV}(\vartheta_{VL,j}, \dot{m}_k)$$

und

$$\bar{n}_{korr}^{k} = \frac{1}{J} \cdot \sum_{j=1}^{J} n_{korr}\left(\vartheta_{VL,j}, \dot{m}_{k}\right).$$

Der die Zielempfindlichkeit mit definierter Unsicherheit einstellende, abschnittsweise Korrekturvektor lautet dann $\bar{n}_{korr}^{k}\left(\bar{\Delta}_{EHKV}^{k}\right)$.

Alternativ kann die Korrekturgröße $k_{korr}$ neben der Abhängigkeit von der Temperaturdifferenz $\Delta_{EHKV}$ auch als ein mehrdimensionales Kennfeld ausgebildet sein und zusätzlich abhängen von den Absolutwerten der Sensortemperaturen $\vartheta_{HS}, \vartheta_{RS}$, z.B. als $k_{korr}(\vartheta_{HS}, \Delta_{EHKV})$.

Weitere oder alternative Anhängigkeiten Korrekturgröße $k_{korr}$ neben $\Delta_{EHKV}$ auch im Sinnes eines mehrdimensionalen Kennfelds zusätzlich abhängen von der Vorlauftemperatur $\vartheta_{VL}$. Da die Vorlauftemperatur $\vartheta_{VL}$ als Messwert nicht vorhanden ist, jedoch für alle Heizkörper einer Heizungsanlage ungefähr gleich sein sollte, kann diese als Parameter für alle Geräte in einer Heizungsanlage fest vorgegeben und parametriert bzw. der passende Korrekturvektor $k_{korr}(\vartheta_{VL,voreinstell}, \Delta_{EHKV})$ zur Einstellung der Heizungsanlage ausgewählt bzw. programmiert werden.

## Patentansprüche

1. Verfahren zur Erfassung der Wärmeabgabe ($Q$) eines Heizkörpers (10), bei dem

   - eine Heizkörpertemperatur ($\vartheta_{HS}$) und eine Raumlufttemperatur ($\vartheta_{RS}$) erfasst werden, und
   - unter Verwendung

      (a) der erfassten Heizkörpertemperatur ($\vartheta_{HS}$),
      (b) der erfassten Raumlufttemperatur ($\vartheta_{RS}$) und
      (c) eines oder mehrerer der Parameter Heizkörperreferenzleistung ($\dot{Q}_{N}$), Bewertungsfaktor ($K_{Q}$), Bewertungsfaktor ($K_{C}$), Bewertungsfaktor ($K_{T}$), Heizkörperexponent ($n$)

   die Wärmeabgabe ($Q$) des Heizkörpers (10) ermittelt wird,

   **dadurch gekennzeichnet, dass**

      - ein Roh-Verbrauchsinkrement ($\Delta Z_{roh}(\Delta_{EHKV})$) als funktionaler Zusammenhang zwischen dem Roh-Verbrauchsinkrement ($\Delta Z_{roh}$) und einer zumindest die Heizkörpertemperatur ($\vartheta_{HS}$) berücksichtigenden Temperaturgröße ($\Delta_{EHKV}$) berechnet wird,
      - das Roh-Verbrauchsinkrement ($\Delta Z_{roh}(\Delta_{EHKV})$) mittels einer Korrekturgröße ($k_{korr}$) durch eine rechnerische Verknüpfung ($f_1$) in ein Verbrauchsinkrement ($\Delta Z = f_1(\Delta Z_{roh}(\Delta_{EHKV}), k_{korr}(\Delta_{EHKV}))$) so umgerechnet wird, dass eine als das Verhältnis von Verbrauchsinkrement ($\Delta Z$) zur tatsächlichen Wärmeabgabe ($\dot{Q} \cdot \Delta t = \Delta Q$) des Heizkörpers (10) definierte Empfindlichkeit ($E$) einem Zielverlauf ($E_{Ziel}$) folgt, und
      - die Korrekturgröße ($k_{korr}(\Delta_{EHKV})$) in Abhängigkeit von der Temperaturgröße ($\Delta_{EHKV}$) als Kennfunktion abgelegt ist.

2. Verfahren nach Anspruch 1, **dadurch gekennzeichnet, dass** der Zielverlauf ($E_{Ziel}$) der Empfindlichkeit ($E$) durch einen konstanten Empfindlichkeitssollwert $\left(E_{soll}^{konst}\right)$ oder durch eine Empfindlichkeitssollwertfunktion ($E_{soll} = f(w)$) vorgegeben ist.

3. Verfahren nach Anspruch 2, **dadurch gekennzeichnet, dass** die Empfindlichkeitssollwertfunktion ($E_{soll} = f(w)$) von mindestens einer der nachfolgenden Größen ($w$) abhängt:

   - Temperaturgröße ($\Delta_{EHKV}$);
   - Massestrom ($\dot{m}$) des Wärmeträgermediums;
   - auf den Nennmassestrom ($\dot{m}_{N}$) normierter Massestrom ($\dot{m}/\dot{m}_{N}$) des Wärmeträgermediums;
   - Vorlauftemperatur ($\vartheta_{VL}$) des Wärmeträgermediums.

4. Verfahren nach einem der vorhergehenden Ansprüche, **dadurch gekennzeichnet, dass** die Korrekturgröße $(k_{korr}(\Delta_{EHKV}))$

- durch Ermitteln einer Betriebspunkt-Korrekturgröße $\left(k_{korr}^{k,j}\left(\dot{m}_k\,,\vartheta_{VL,j}\right)\right)$ und einer Betriebspunkt-Temperaturgröße $\left(\Delta_{EHKV}^{k,j}\left(\dot{m}_k\,,\vartheta_{VL,j}\right)\right)$ bei verschiedenen Betriebspunkten $([\dot{m}_k,\vartheta_{VL,j}])$ des Heizkörpers (10) sowie

- durch Ausmitteln einer der Abhängigkeiten Massestrom $(\dot{m})$ oder Vorlauftemperatur $(\vartheta_{VL})$ in der Betriebspunkt-Korrekturgröße $\left(k_{korr}^{k,j}\left(\dot{m}_k\,,\vartheta_{VL,j}\right)\right)$ und der Betriebspunkt-Temperaturgröße $\left(\Delta_{EHKV}^{k,j}\left(\dot{m}_k\,,\vartheta_{VL,j}\right)\right)$

bestimmt ist, wobei

- Betriebspunkte $([\dot{m}_k,\vartheta_{VL,j}])$ des Heizkörpers (10) durch diskrete Massestromwerte $(\dot{m}_k)$ des Massestroms $(\dot{m})$ und diskrete Vorlauftemperaturwerte $(\vartheta_{VL,j})$ der Vorlauftemperatur $(\vartheta_{VL})$ definiert sind und
- für ein Raster von Betriebspunkten $([\dot{m}_k,\vartheta_{VL,j}])$

   (a) die tatsächliche aktuelle Wärmeleistung $(\dot{Q})$,

   (b) die Betriebspunkt-Temperaturgröße $\left(\Delta_{EHKV}^{k,j}\left(\dot{m}_k\,,\vartheta_{VL,j}\right)\right)$, und
   (c) das Roh-Verbrauchsinkrement $(\Delta Z_{roh}(\Delta_{EHKV}))$ der an dem Heizkörper (10) montierten Vorrichtung (1) zur Erfassung der Wärmeleistung

erfasst werden und

- die Betriebspunkt-Korrekturgröße $\left(k_{korr}^{k,j}\left(\dot{m}_k\,,\vartheta_{VL,j}\right)\right)$ aus der Randbedingung abgeleitet wird, dass für alle Betriebspunkte $([\dot{m}_k,\vartheta_{VL,j}])$ des Heizkörpers (10) das Verhältnis von Verbrauchsinkrement $(\Delta Z = f_1(\Delta Z_{roh}(\Delta_{EHKV}),k_{korr}))$ zu tatsächlicher Wärmeleistung $(\dot{Q})$ des Heizkörpers (10) dem Zielverlauf $(E_{Ziel})$ entspricht.

5. Verfahren nach Anspruch 4, **dadurch gekennzeichnet, dass** das Ausmitteln der Abhängigkeit von der Vorlauftemperatur $(\vartheta_{VL})$ dadurch erfolgt, dass

- für jeweils einen der diskreten Massestromwerte $(\dot{m}_k)$ ein Temperaturgrößen-Mittelwert $\left(\overline{\Delta}_{EHKV}^{k}\right)$ über die verschiedenen Vorlauftemperaturwerte $(\vartheta_{VL,j})$ gebildet wird,

- für jeweils einen der diskreten Massestromwerte $(\dot{m}_k)$ ein Korrekturgrößen-Mittelwert $\left(\overline{k}_{korr}^{k}\right)$ der Zwischen-Korrekturgröße $\left(k_{korr}^{k,j}\left(\dot{m}_k\,,\vartheta_{VL,j},\Delta_{EHKV}\right)\right)$ über die verschiedenen Vorlauftemperaturwerte $(\vartheta_{VL,j})$ gebildet wird,

und dass die Korrekturgröße $k_{korr}(\Delta_{EHKV})$ durch einen Korrekturwertvektor $\left(\left[\overline{\Delta}_{EHKV}^{k},\overline{k}_{korr}^{k}\right]\right)$ definiert ist, der für jeden der diskreten Massestromwerte $(\dot{m}_k)$ den Temperaturgrößen-Mittelwert $\left(\overline{\Delta}_{EHKV}^{k}\right)$ und den Korrekturgrößen-Mittelwert $\left(\overline{k}_{korr}^{k}\right)$ enthält.

6. Verfahren nach einem der vorhergehenden Ansprüche, **dadurch gekennzeichnet, dass** als Korrekturgröße $(k_{korr}(\Delta_{EHKV}))$ ein Korrekturfaktor $(K(\Delta_{EHKV}))$ gewählt wird, der in der rechnerischen Verknüpfung $(f_1)$ mit dem Roh-Verbrauchsinkrement $(\Delta Z_{roh}(\Delta_{EHKV}))$ multipliziert wird, um das endgültige Verbrauchsinkrement $(\Delta Z)$ zu bilden.

**7.** Verfahren nach Anspruch 6, **dadurch gekennzeichnet, dass** das Roh-Verbrauchsinkrement ($\Delta Z_{roh}(\Delta_{EHKV})$) des Heizkostenverteilers als unkorrigiert berechnete aktuelle Wärmeabgabe ($\Delta Q_{unkorr}$) des Heizkörpers berechnet wird und dass als Korrekturfaktor ($K(\Delta_{EHKV})$) der zusätzliche Faktor ($K_E(\Delta_{EHKV})$) gewählt wird, so dass für den Zielverlauf ($E_{Ziel}$) der Empfindlichkeit ($E$) gilt:

$$E_{Ziel} := \frac{\Delta Q}{\dot{Q} \cdot \Delta t} = \frac{\dot{Q}_{unkorr}(\Delta_{EHKV}) \cdot K_E(\Delta_{EHKV})}{\dot{Q}}$$

**8.** Verfahren nach einem der Ansprüche 1 bis 5, **dadurch gekennzeichnet, dass** als Korrekturgröße ($k_{korr}$) ein Korrekturexponent ($n_{korr}(\Delta_{EHKV})$) verwendet wird, der in einem Roh-Verbrauchsinkrement ($\Delta Z_{roh}(\Delta_{EHKV})$) entsprechend der rechnerischen Verknüpfung ($f_1$) nach der Funktionsvorschrift $\Delta Z_{roh}(\Delta_{EHKV}) = VAR_1 \cdot (VAR_2 \cdot \Delta_{EHKV})^n$ den Heizkörperexponent ($n$) korrigiert oder ersetzt, um das endgültige Verbrauchsinkrement ($\Delta Z$) zu bilden, wobei die Größen $VAR_1$, $VAR_2$ Variablen sind.

**9.** Verfahren nach einem der vorhergehenden Ansprüche, **dadurch gekennzeichnet, dass** die Kennfunktion als Kennfeld oder Wertetabelle ausgebildet ist, bei der einem diskreten Wert für die Temperaturgröße ($\Delta_{EHKV}$) die für diese Temperaturgröße ($\Delta_{EHKV}$) anzuwendende Korrekturgröße $k_{korr}(\Delta_{EHKV})$ zugeordnet ist.

**10.** Verfahren nach Anspruch 9, **dadurch gekennzeichnet, dass** bei Werten für die Temperaturgröße ($\Delta_{EHKV}$), die von den diskreten Werten verschieden sind, eine Interpolation oder eine Extrapolation für die Korrekturgröße ($k_{korr}(\Delta_{EHKV})$) durchgeführt wird.

**11.** Verfahren nach Anspruch 9, **dadurch gekennzeichnet, dass** aus den diskreten Werten für die Temperaturgröße ($\Delta_{EHKV}$) und den zugeordneten Korrekturgrößen ($k_{korr}(\Delta_{EHKV})$) eine Funktion abgeleitet wird, die einen funktionalen Zusammenhang zwischen der Temperaturgröße ($\Delta_{EHKV}$) und der anzuwendenden Korrekturgröße ($k_{korr}(\Delta_{EHKV})$) beschreibt.

**12.** Verfahren nach Anspruch 9, **dadurch gekennzeichnet, dass** für vorgegebene Intervalle von Temperaturgrößen ($[\Delta_{EHKV1} ... \Delta_{EHKV2}]$, $[\Delta_{EHKV2} ... \Delta_{EHKV3}]$, ...) jeweils eine Korrekturgröße $\left(k_{korr}^{intervall}(\Delta_{EHKV})\right)$ vorgegeben wird, die durch eine Approximation der in dem Intervall enthaltenen diskreten Werte für diese Temperaturgrößen ($\Delta_{EHKV}$) und die für diese Temperaturgröße ($\Delta_{EHKV}$) anzuwendende Korrekturgröße ($k_{korr}(\Delta_{EHKV})$) ermittelt wird.

**13.** Verfahren nach einem der vorhergehenden Ansprüche, **dadurch gekennzeichnet, dass** für die als Kennfeld abgelegte Korrekturgröße ($k_{korr}(\Delta_{EHKV})$) zusätzlich mindestens eine der Größen Vorlauftemperatur ($\vartheta_{VL}$), Heizkörpertemperatur ($\vartheta_{HS}$) oder Massestrom ($\dot{m}$) berücksichtigt wird, wobei die berücksichtigten Größen Vorlauftemperatur ($\vartheta_{VL}$), Heizkörpertemperatur ($\vartheta_{HS}$) und/oder der Massestrom ($\dot{m}$) fest vorgegeben oder als Funktion mindestens einer der Größen Heizkörpertemperatur ($\vartheta_{HS}$), Raumlufttemperatur ($\vartheta_{RS}$) oder der daraus bestimmten Temperaturgröße ($\Delta_{EHKV}$) parametriert sind.

**14.** Vorrichtung zur Erfassung der Wärmeabgabe ($Q$) eines Heizkörpers (10) mit einem

    - Heizkörpersensor (2) zur Erfassung einer Heizkörpertemperatur ($\vartheta_{HS}$),
    - einem Raumluftsensor (3) zur Erfassung einer Raumlufttemperatur ($\vartheta_{RS}$) und
    - einer Recheneinheit (4), welche dazu eingerichtet ist, unter Verwendung

        - der erfassten Heizkörpertemperatur ($\vartheta_{HS}$),
        - der erfassten Raumlufttemperatur ($\vartheta_{RS}$) und
        - eines oder mehrerer der Parameter Heizkörperreferenzleistung ($\dot{Q}_N$), Bewertungsfaktor ($K_Q$), Korrekturfaktor ($K_C$), Korrekturfaktor ($K_T$), Heizkörperexponent ($n$)

    die Wärmeabgabe ($Q$) des Heizkörpers (10) zu ermitteln,

**dadurch gekennzeichnet, dass**
die Recheneinheit (4) weiter dazu eingerichtet ist, das Verfahren nach einem der Ansprüche 1 bis 13 durchzuführen.

**Claims**

1. A method for determining the heat output (Q) of a radiator (10), in which

    - a radiator temperature ($\vartheta_{HS}$) and an ambient air temperature ($\vartheta_{RS}$) are determined, and

    the heat output (Q) of the radiator (10) is determined

    - using

        (a) the determined radiator temperature ($\vartheta_{HS}$),
        (b) the determined ambient air temperature ($\vartheta_{RS}$) and
        (c) one or several of the parameters radiator reference output ($Q_N$), assessment factor ($K_Q$), assessment factor ($K_C$), assessment factor ($K_T$), and radiator exponent (n),

    **characterized in that**

    - a raw consumption increment ($\Delta Z_{raw}(\Delta_{EHKV})$) is calculated as the functional correlation between the raw consumption increment ($\Delta Z_{raw}$) and a temperature variable ($\Delta_{EHKV}$) that considers at least the radiator temperature ($\vartheta_{HS}$),
    - the raw consumption increment ($\Delta Z_{raw}(\Delta_{EHKV})$) is converted by means of a correction variable ($k_{corr}$) via computational linkage ($f_1$) into a consumption increment ($\Delta Z = f_1(\Delta Z_{raw}(\Delta_{EHKV}), k_{corr}(\Delta_{EHKV}))$) in such a way that a sensitivity (E) defined as the ratio between the consumption increment ($\Delta Z$) and the actual heat output ($Q \cdot \Delta t = \Delta Q$) of the radiator (10) follows a targeted progression ($E_{target}$), and
    - the correction variable ($k_{corr}(\Delta_{EHKV})$) is filed as a characteristic function as a function of the temperature variable ($\Delta_{EHKV}$).

2. The method according to claim 1, **characterized in that** the targeted progression ($E_{target}$) of sensitivity (E) is prescribed by a constant desired sensitivity value ($E^{const}_{des}$) or by a desired sensitivity value function ($E_{des} = f(w)$).

3. The method according to claim 2, **characterized in that** the desired sensitivity value function ($E_{des} = f(w)$) depends on at least one of the following variables (w) :

    - Temperature variable ($\Delta_{EHKV}$);
    - Mass flow (m) of the heat transfer medium;
    - Mass flow ($\dot{m}/\dot{m}_N$) of the heat transfer medium normed to the nominal mass flow ($\dot{m}_N$);
    - Flow temperature ($\vartheta_{VL}$) of the heat transfer medium.

4. The method according to one of the preceding claims, **characterized in that** the correction variable ($k_{corr}(\Delta_{EHKV})$) is determined

    - by ascertaining an operating point correction variable ($k^{k,j}_{corr}(\dot{m}_k, \vartheta_{VL,j})$) and an operating point temperature variable ($k^{k,j}_{EHKV}(\dot{m}_k, \vartheta_{VL,j})$) at different operating points ($[\dot{m}_k, \vartheta_{VL,j}]$) of the radiator (10), as well as
    - by taking the mean of one of the dependencies mass flow (m) or flow temperature ($\vartheta_{VL}$) in the operating point correction variable ($k^{k,j}_{corr}(\dot{m}_k, \vartheta_{VL,j})$) and operating point temperature variable ($k^{k,j}_{EHKV}(\dot{m}_k, \vartheta_{VL,j})$),

    wherein

    - operating points ($[\dot{m}_k, \vartheta_{VL,j}]$) of the radiator (10) are defined by discrete mass flow values ($\dot{m}_k$) of the mass flow (m) and discrete flow temperature values ($\vartheta_{VL,j}$) of the flow temperature ($\vartheta_{VL}$), and,
    - for a grid of operating points ($[\dot{m}_k, \vartheta_{VL,j}]$),

        (a) the actual current heat output (Q),
        (b) the operating point temperature variable ($k^{k,j}_{corr}(\dot{m}_k, \vartheta_{VL, j})$), and
        (c) the raw consumption increment ($\Delta 2_{raw}(\Delta_{EHKV})$) of the device (1) mounted on the radiator (10) are determined, and

    - the operating point correction variable ($k^{k,j}_{corr}(\dot{m}_k, \vartheta_{VL, j})$) is derived from the boundary condition that, for all

operating points ($[\dot{m}_k, \vartheta_{VL,j}]$) of the radiator (10), the ratio between the consumption increment ($\Delta Z = f_1(\Delta Z_{raw}(\Delta_{EHKV}), k_{corr}(\Delta_{EHKV}))$) and the actual heat output (Q) of the radiator (10) corresponds to the targeted progression ($E_{target}$).

5. The method according to claim 4, **characterized in that** the mean is taken for the dependence on the flow temperature ($\vartheta_{VL}$) in such a way that

 - a temperature variable average value ($\Delta_{k/EHKV}$) is formed over the various flow temperature values ($\vartheta_{VL,j}$]) for a respective one of the discrete mass flow values ($\dot{m}_k$),
 - a correction variable average value ($k^k_{corr}$) of the intermediate correction variable ($k^{k,j}_{corr}(\dot{m}_k, \vartheta_{VL,j}, \Delta_{EHKV})$) is formed over the various flow temperature values ($\vartheta_{VL,j}$) for a respective one of the discrete mass flow values ($\dot{m}_k$),

and that the correction variable $k_{corr}(\Delta_{EHKV})$ is defined by a correction value vector ($[\Delta^k_{EHKV}, k^k_{corr}]$), which contains the temperature variable average ($\Delta_{k/EHKV}$) value and correction variable average value ($k^k_{corr}$) for each of the discrete mass flow values ($\dot{m}_k$).

6. The method according to one of the preceding claims, **characterized in that** the selected correction variable correction ($k_{corr}(\Delta_{EHKV})$) is a correction factor ($K(\Delta_{EHKV})$) that is multiplied by the raw consumption increment ($\Delta Z_{raw}(\Delta_{EHKV})$) in the computational linkage ($f_1$) in order to form the final consumption increment ($\Delta Z$).

7. The method according to claim 6, **characterized in that** the raw consumption increment ($\Delta Z_{raw}(\Delta_{EHKV})$) of the heat cost allocator is calculated as the uncorrected calculated current heat output ($\Delta Q_{uncorr}$) of the radiator, and that the additional factor ($K_E(\Delta_{EHKV})$) is selected as the correction factor ($K(\Delta_{EHKV})$), so that the following applies to the targeted progression ($E_{target}$) for sensitivity (E):

$$E_{target} := \frac{\dot{\Delta Q}}{\dot{Q} \cdot \Delta t} = \frac{Q_{uncorr}(\Delta_{EHKV}) \cdot K_E(\Delta_{EHKV})}{Q}$$

8. The method according to one of claims 1 to 5, **characterized in that** the used correction variable ($k_{corr}$) is a correction exponent ($n_{corr}(\Delta_{EHKV})$) that corrects or replaces the radiator exponent (n) in a raw consumption increment ($\Delta Z_{raw}(\Delta_{EHKV})$) corresponding to the computational linkage ($f_1$) according to the function rule $\Delta 2_{raw}(\Delta_{EHKV}) = VAR_1 \cdot (VAR_2 \cdot \Delta_{EHKV})^n$, so as to form the final consumption increment ($\Delta Z$), wherein $VAR_1$, $VAR_2$ are variables.

9. The method according to one of the preceding claims, **characterized in that** the characteristic function is formed as a characteristic diagram or value table, in which a discrete value for the temperature variable ($\Delta_{EHKV}$) has allocated to it the correction variable $k_{corr}(\Delta_{EHKV})$ to be applied for this temperature variable ($\Delta_{EHKV}$).

10. The method according to claim 9, **characterized in that**, given values for the temperature variable ($\Delta_{EHKV}$) that differ from the discrete values, an interpolation or extrapolation is performed for the correction variable ($k_{corr}(\Delta_{EHKV})$)

11. The method according to claim 9, **characterized in that** a function describing a functional correlation between the temperature variable ($\Delta_{EHKV}$) and the correction variable ($k_{corr}(\Delta_{EHKV})$) to be applied is derived from the discrete values for the temperature variable ($\Delta_{EHKV}$) and the allocated correction variables ($k_{corr}(\Delta_{EHKV})$).

12. The method according to claim 9, **characterized in that** prescribed intervals of temperature variables ($[\Delta_{EHKV1} \dots \Delta_{EHKV2}]$, $[\Delta_{EHKV2} \dots \Delta_{EHKV3}]$, ...) each have prescribed for them a correction variable ($k^{interval}_{corr}(\Delta_{EHKV})$), which is determined by approximating the discrete values for these temperature variables ($\Delta_{EHKV}$) contained in the interval and the correction variable ($k_{corr}(\Delta_{EHKV})$) to be applied for this temperature variable ($\Delta_{EHKV}$).

13. The method according to one of the preceding claims, **characterized in** at least one of the variables flow temperature ($\vartheta_{VL}$), radiator temperature ($\vartheta_{HS}$) or mass flow (rh) is additionally considered for the correction variable ($k_{corr}(\Delta_{EHKV})$) filed as the characteristic function, wherein the considered variables flow temperature ($\vartheta_{VL}$), radiator temperature

($\vartheta_{HS}$) and/or mass flow (m) are fixedly prescribed or parameterized as a function of at least one of the variables radiator temperature ($\vartheta_{HS}$), ambient air temperature ($\vartheta_{RS}$) or the temperature variable ($\Delta_{EHKV}$) determined therefrom.

**14.** A device for determining the heat output (Q) of a radiator (10) with a

- radiator sensor (2) for determining a radiator temperature ($\vartheta_{HS}$),
- an ambient air sensor (3) for determining an ambient air temperature ($\vartheta_{RS}$) and
- a computing unit (4) set up to determine the heat output (Q) of the radiator (10) using

-- the determined radiator temperature ($\vartheta_{HS}$),
-- the determined ambient air temperature ($\vartheta_{RS}$), and
-- one or several of the parameters radiator reference output ($Q_N$), assessment factor ($K_Q$), assessment factor ($K_C$), assessment factor ($K_T$), and radiator exponent (n),

**characterized in that**
the computing unit (4) is further set up to implement the method according to one of claims 1 to 13.

**Revendications**

**1.** Procédé de détermination d'émission de chaleur (Q) d'un radiateur (10) pour lequel

- une température de radiateur ($\vartheta_{HS}$) et une température de l'air ambiant ($\vartheta_{RS}$) sont déterminées, et

l'émission de chaleur (Q) du radiateur (10) est déterminée

- en utilisant

(a) la température de radiateur déterminée ($\vartheta_{HS}$),
(b) la température de l'air ambiant déterminée ($\vartheta_{RS}$), et
(c) un ou plusieurs des paramètres , puissance de référence du radiateur ($Q_N$), facteur d'évaluation ($K_Q$), facteur d'évaluation ($K_C$), facteur d'évaluation ($K_T$), exposant du radiateur (n),

**caractérisé en ce qu'**

- une progression de consommation brute ($\Delta Z_{brute}(\Delta_{EHKV})$) est calculée en tant que corrélation fonctionnelle entre la progression de consommation brute ($\Delta Z_{brute}$) et une grandeur de température ($\Delta_{EHKV}$) prenant au moins en considération la température de radiateur ($\vartheta_{HS}$),
- la progression de consommation brute ($\Delta Z_{brute}(\Delta_{EHKV})$) est converti en une progression de consommation ($\Delta Z = f_1(\Delta Z_{brute}(\Delta_{EHKV}), k_{corr}(\Delta_{EHKV}))$) au moyen d'une grandeur de correction ($k_{corr}$) par une combinaison mathématique ($f_1$) de telle manière qu'une sensibilité ($E$) définie en tant que le rapport entre la progression de consommation ($\Delta Z$) et l'émission de chaleur effective ($Q . \Delta t = \Delta Q$) du radiateur (10) suit un profil visé ($E_{but}$), et
- la grandeur de correction ($k_{corr}(\Delta_{EHKV})$) est mémorisée en tant que fonction caractéristique en fonction de la grandeur de température ($\Delta_{EHKV}$).

**2.** Procédé selon la revendication 1, **caractérisé en ce que** le profil visé ($E_{but}$) de la sensibilité ($E$) est prédéfini par une valeur théorique de sensibilité constante ($E^{const}_{théor}$) ou par une fonction de valeur théorique de sensibilité ($E_{théor} = f(w)$).

**3.** Procédé selon la revendication 2, **caractérisé en ce que** la fonction de valeur théorique de sensibilité ($E_{théor} = f(w)$) dépend d'au moins des grandeurs ($w$) suivantes :

- grandeur de température ($\Delta_{EHKV}$),
- débit massique (m) du milieu caloporteur,
- débit massique ($\dot{m}/\dot{m}_N$) normalisé sur le débit massique nominal ($\dot{m}_N$),
- température d'arrivée ($\vartheta_{VL}$) du milieu caloporteur.

**4.** Procédé selon l'une quelconque des revendications précédentes, **caractérisé en ce que** la grandeur de correction

($k_{corr}(\Delta_{EHKV})$) est définie

- par la détermination d'une grandeur de correction du point de fonctionnement ($k^{k,j}_{corr}(\dot{m}_k, \vartheta_{VL,j})$) et d'une grandeur de température du point de fonctionnement ($k^{k,j}_{EHKV}(\dot{m}_k, \vartheta_{VL,j})$) aux différents points de fonctionnement ([$\dot{m}_k, \vartheta_{VL,j}$]) du radiateur (10), ainsi que
- par la mise en moyenne d'une des fonctions, débit massique (m) ou température d'arrivée ($\vartheta_{VL}$) en grandeur de correction du point de fonctionnement $k^{k,j}_{corr}(\dot{m}_k, \vartheta_{VL,j})$) et en grandeur de température de point de fonctionnement ($k^{k,j}_{EHKV}(\dot{m}_k, \vartheta_{VL,j})$),

sachant que

- les points de fonctionnement ([$\dot{m}_k, \vartheta_{VL,j}$]) du radiateur (10) sont définis par des valeurs de débit massique discrètes ($\dot{m}_k$) du débit massique (m) et les valeurs de température d'arrivée ($\vartheta_{VL,j}$) de la température d'arrivée ($\vartheta_{VL}$), et

sont déterminés

- pour une grille de points de fonctionnement ([$\dot{m}_k, \vartheta_{VL,j}$]),

   (a) la puissance calorifique actuelle effective (Q),
   (b) la grandeur de température de point de fonctionnement ($k^{k,j}_{corr}(\dot{m}_k, \vartheta_{VL,j})$), et
   (c) l'progression de consommation brute ($\Delta Z_{brute}(\Delta_{EHKV})$) du dispositif (1) monté sur le radiateur (10) pour la détermination de la puissance calorifique, et

- la grandeur de correction de point de fonctionnement ($k^{k,j}_{corr}(\dot{m}_k, \vartheta_{VL,j})$) est dérivée de la condition marginale, du fait que pour tous les points de fonctionnement ([$\dot{m}_k, \vartheta_{VL,j}$]) du radiateur (10), le rapport entre la progression de consommation ($\Delta Z = f_1(\Delta Z_{brute}(\Delta_{EHKV}), k_{corr})$) et la puissance calorifique effective (Q) du radiateur (10) correspond au profil visé ($E_{but}$).

5. Procédé selon la revendication 4, **caractérisé en ce que** la mise en moyenne du fait d'être fonction de la température d'arrivée ($\vartheta_{VL}$) a lieu par le fait que

- pour respectivement une des valeurs de débit massique discrètes ($\dot{m}_k$), une moyenne des grandeurs de température ($\Delta_{k/EHKV}$) est formée par le biais des différentes valeurs de température d'arrivée ($\vartheta_{VL,j}$),
- pour respectivement une des valeurs de débit massique discrètes ($\dot{m}_k$), une moyenne des grandeurs de correction ($k^k_{corr}$) de la grandeur de correction intermédiaire ($k^{k,j}_{corr}(\dot{m}_k, \vartheta_{VL,j}, \Delta_{EHKV})$) est formée par le biais des différentes valeurs de température d'arrivée ($\vartheta_{VL}$),

et **en ce que** la grandeur de correction $k_{corr}(\Delta_{EHKV})$ est définie par un vecteur de valeur de correction ([$\Delta^k_{EHKV}, k^k_{corr}$]), qui contient pour chacune des valeurs de débit massique discrètes ($\dot{m}_k$) la moyenne de grandeurs de températures ($\Delta_{k/EHKV}$) et la moyenne de grandeurs de correction ($k^k_{corr}$).

6. Procédé selon l'une quelconque des revendications précédentes, **caractérisé en ce qu'**un facteur de correction ($K(\Delta_{EHKV})$) est choisi en tant que grandeur de correction ($k_{corr}(\Delta_{EHKV})$), qui est multiplié dans la combinaison mathématique ($f_1$) par la progression de consommation brute $\Delta Z_{brute}(\Delta_{EHKV})$) pour former la progression de consommation ($\Delta Z$) définitive.

7. Procédé selon la revendication 6, **caractérisé en ce que** la progression de consommation brute ($\Delta Z_{brute}(\Delta_{EHKV})$) du répartiteur de frais de chauffage est calculée en tant qu'émission de chaleur actuelle calculée de façon non corrigée ($\Delta Q_{non-corr}$) du radiateur et **en ce que** le facteur supplémentaire ($K_E(\Delta_{EHKV})$) est choisi comme facteur de correction ($K(\Delta_{EHKV})$) de telle manière que pour le profil visé ($E_{but}$) de *la sensibilité (E)*, on applique

$$E_{but} := \frac{\dot{\Delta Q}}{\dot{Q} \cdot \Delta t} = \frac{Q_{non-corr} \; (\Delta_{EHKV}) \; \cdot \; K_E \, (\Delta_{EHKV})}{Q}$$

**8.** Procédé selon l'une quelconque des revendications 1 à 5, **caractérisé en ce qu'**un exposant de correction ($n_{corr}(\Delta_{EHKV})$) est utilisé comme grandeur de correction ($k_{corr}$), qui corrige ou remplace l'exposant de radiateur (n) dans une progression de consommation brute ($\Delta Z_{brute}(\Delta_{EHKV})$) selon la combinaison mathématique ($f_1$) d'après la prescription de fonctionnement ($\Delta Z_{brute}(\Delta_{EHKV}) = VAR_1 \cdot (VAR_2 \cdot \Delta_{EHKV})^n$ pour former la progression de consommation définitive ($\Delta Z$), sachant que les grandeurs $VAR_1$, $VAR_2$ sont des variables.

**9.** Procédé selon l'une quelconque des revendications précédentes, **caractérisé en ce que** la fonction caractéristique est constituée comme champ caractéristique ou tableau de valeurs pour lequel la grandeur de correction $k_{corr}(\Delta_{EHKV})$ à utiliser pour cette grandeur de température ($\Delta_{EHKV}$) est attribuée à une valeur discrète pour la grandeur de température ($\Delta_{EHKV}$).

**10.** Procédé selon la revendication 9, **caractérisé en ce que** concernant les valeurs pour la grandeur de température ($\Delta_{EHKV}$), qui sont différentes des valeurs discrètes, on effectue une interpolation ou une extrapolation pour la grandeur de correction ($k_{corr}(\Delta_{EHKV})$).

**11.** Procédé selon la revendication 9, **caractérisé en ce qu'**à partir des valeurs discrètes pour la grandeur de température ($\Delta_{EHKV}$) et des grandeurs de correction attribuées ($k_{corr}(\Delta_{EHKV})$), on dérive une fonction, qui décrit une corrélation fonctionnelle entre la grandeur de température ($\Delta_{EHKV}$) et la grandeur de correction ($k_{corr}(\Delta_{EHKV})$) à utiliser.

**12.** Procédé selon la revendication 9, **caractérisé en ce que** pour des intervalles prédéfinis de grandeurs de température ($[\Delta_{EHKV1} \ldots \Delta_{EHKV2}]$, $[\Delta_{EHKV2} \ldots \Delta_{EHKV3}]$, ...), une grandeur de correction ($k^{intervalle}_{corr}(\Delta_{EHKV})$) est respectivement prédéfinie, qui est déterminée par une approximation des valeurs discrètes contenues dans l'intervalle pour ces grandeurs de température ($\Delta_{EHKV}$) et la grandeur de correction ($k_{corr}(\Delta_{EHKV})$) à utiliser pour cette grandeur de température ($\Delta_{EHKV}$).

**13.** Procédé selon l'une quelconque des revendications précédentes, **caractérisé en ce que** pour la grandeur de correction ($k_{corr}(\Delta_{EHKV})$) mémorisée en tant que champ caractéristique, au moins une des grandeurs, température d'arrivée ($\vartheta_{VL}$), température du radiateur ($\vartheta_{HS}$), ou débit massique ($\dot{m}$), est prise en plus en considération, sachant que les grandeurs considérées, température d'arrivée ($\vartheta_{VL}$), température du radiateur ($\vartheta_{HS}$) et/ou le débit massique ($\dot{m}$), sont fermement prédéfinies ou sont paramétrées en tant que fonction d'au moins une des grandeurs, température du radiateur ($\vartheta_{HS}$), température de l'air ambiant ($\vartheta_{RS}$), ou de la grandeur de température ($\Delta_{EHKV}$) déterminée à partir de celles-ci.

**14.** Dispositif de détermination de l'émission de chaleur (Q) d'un radiateur (10) avec

- un capteur de radiateur (2) pour déterminer une température de radiateur ($\vartheta_{HS}$),
- un capteur d'air ambiant (3) pour déterminer une température de l'air ambiant ($\vartheta_{RS}$), et
- une unité de calcul (4), laquelle est agencée à cet effet pour déterminer l'émission de chaleur (Q) du radiateur (10), en utilisant

-- la température du radiateur déterminée ($\vartheta_{HS}$),
-- la température de l'air ambiant déterminée ($\vartheta_{RS}$), et
-- un ou plusieurs des paramètres, puissance de référence du radiateur ($Q_N$), facteur d'évaluation ($K_Q$), facteur de correction ($K_C$), facteur de correction ($K_T$), exposant du radiateur (n),

pour déterminer l'émission de chaleur (Q) du radiateur (10),
**caractérisé en ce que**
l'unité de calcul (4) est agencée en outre à cet effet pour exécuter le procédé selon l'une quelconque des revendications 1 à 13.

$$Q = \int \dot{Q}\, dt$$

$$Z = \sum \Delta Z$$

$\vartheta_{HS}$

$\vartheta_{RS}$

10

11

$\vartheta_{VL}$

$\dot{m}$

12

$\vartheta_{RL}$

$\dot{m}$

2

1

3

4

**Fig. 1**

$$\Delta Z_{\text{roh}}(\Delta_{EHKV}) \quad 101$$

$$k_{\text{korr}}^{k,j}(\dot{m}_k, \vartheta_{VL,j}) \quad 150$$

$$k_{korr}(\Delta_{EHKV}) \quad 151$$

$$\Delta Z = f_1(\Delta Z_{\text{roh}}, k_{korr}) \quad 102$$

$$k_{korr}(\Delta_{EHKV}) \quad 152$$

$$Z = \sum \Delta Z \quad 103$$

100

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1770469 B1
- DE 102005045198 B3
- EP 1770469 A
- EP 1376084 A2
- DE 102005032834 A1